# EUROPEAN PATENT SPECIFICATION

(11) **EP 0 204 389 B1**
(45) Date of publication and mention of the grant of the patent: **26.05.1993**
(21) Application number: 86300256.4
(22) Date of filing: 16.01.1986
(51) Int. Cl.: G05D 1/03, H04L 27/12, H04B 5/00

(54) **Guide wire communications system and method**
Leitkabel-Kommunikationssystem und Steuerungsmethoden
Système de communication à filoguidage et méthode de contrôle

(30) Priority: 02.05.1985 US 729514
(43) Date of publication of application: 10.12.1986
(73) Proprietor: EATON-KENWAY, INC., Salt Lake City Utah 84102 (US)
(72) Inventor: Sherman, Leigh Erwin, West Valley City Utah 84120 (US); Dicks, Richard Michael, Salt Lake City Utah 84105 (US); Whatcott, Gary Lavell, Salt Lake City Utah 84117 (US); Madsen, David Carl, Sandy Utah 84092 (US)
(74) Representative: Douglas, John Andrew

(56) References cited:
- EP-A- 0 124 260
- WO-A-80/02013
- DE-A- 2 428 583
- DE-A- 2 722 222
- DE-A- 2 947 116
- DE-A- 3 136 355
- FR-A- 2 336 726
- US-A- 3 734 229
- US-A- 4 083 008
- US-A- 4 284 941
- PATENT ABSTRACTS OF JAPAN, vol. 5, no. 66 (E-55)[738], 2nd May 1981; & JP - A - 56 16331
- IBM TECHNICAL DISCLOSURE BULLETIN, vol. 27, no. 4A, September 1984, pages 2037-2040, New York, US; J.R. SHUMATE et al.: "Routing and tracking of automatically guided vehicle"

## Description

### Field of Invention

This invention relates to guidance systems, and more particularly to an improvement in communications systems between a central computer and at least one mobile vehicle using low power, low frequency communications waves.

### Prior Art

Arrangements in which a wire-guide traffic path has been used in the guidance of a driverless mobile unit along a desired course have been set forth in U.S. Patents No. 3,009,525 and 3,147,817 issued to Robert DeLiban. In such disclosures, the traffic path is defined by a conductor energized to radiate an electromagnetic field, and a sensing means on the vehicle is operative to detect the radiated energy and to control the vehicle steering means to follow such path.

In the system disclosed in DeLiban U.S. Patent No. 3,147,817, a main traffic path and a plurality of secondary paths which branch away from the main path at different points designated as decision points is disclosed. The portion of a path between two decision points is referred to hereafter as a block. The system further includes means whereby each vehicle senses the presence of another vehicle preceding it by less than a preassigned minimum distance, and is halted while such other vehicle remains within the minimum distance. In this arrangement, each vehicle signals its presence as it passes through a block by radiating a presence signal which is transmitted over conductors to a hold beacon associated with that block. The presence of a vehicle within the limits of a block produces a hold signal at its associated block beacon. As a further vehicle enters a block and draws abreast of the hold beacon, receipt of the hold signal from the beacon is effective to disable the propulsion means of the second vehicle, and thus stop the vehicle until the first vehicle leaves the block. The vehicles, therefore, are transmitting information onto the guide wire at times determined by the vehicle. Each vehicle appropriates the use of one or more blocks as it approaches the block.

In U.S. Patent No. 3,544,788 to Nicolas J. Guzik, there is disclosed an electronic position indicator system, wherein position information signals are transmitted between trains traveling along the same track. Whenever a minimum safe distance between the two trains is reached, as indicated by the communications between the two trains, braking is applied to at least the following train.

While this system is effective in maintaining the predetermined minimum spacing between train units traveling along the same track, the system relies on communications between the two train unit themselves, and on the relative spacing between the train units.

Another vehicle control system which employs two-way communication is disclosed in U.S. Patent No. 3,734,229, issued to D. T. Comer. In this system, the traffic lay out is defined as an array of conductors disposed along the traffic layout and energized with a signal for developing magnetic fields which are detectable by a vehicle carried guidance control unit. A separate array of twin lead conductors disposed beneath the surface of the travel paths form a distributed antenna network providing a communications medium for two-way communication between the stationary control unit and vehicle carried control units using radio frequency waves. A separate antenna system is provided because a low frequency carrier wave was incapable of providing a sufficiently high rate of data transmission. The problem of achieving a high rate of data transmission with a low frequency carrier wave had not been solved. The system disclosed serial polling of the status of the vehicles by the stationary control unit.

In the system disclosed in U.S. Patent No. 4,284,106, to Robert DeLiban, as each vehicle travels along a traffic layout towards a station, a transmitter on the vehicle is enabled periodically to transmit a position signal indictive of the location of the vehicle, and a receiver on the vehicle receives position signals transmitted from all of the other vehicles on the system. Whenever a vehicle comes within a minimum safety distance of a second vehicle, the first vehicle is halted. The position signals of all the vehicles are transmitted periodically in a time divided fashion. Each transmission cycle is subdivided into a plurality of time slots, and each location has a different assigned time slot. Each vehicle transmits a vehicle position signal during the time slot corresponding to the past address of the vehicle, and responds to a position signal transmitted by another vehicle in the time slot corresponding to the present address for the vehicle to halt the vehicle.

It is also known in the prior art to control the vehicle following a path defined by a current guide wire by a two way radio guidance control system in which a traction vehicle sends out location and destination intelligence to a way side station or central controller which in turn transmits steering and traction intelligence to control the vehicle.

In U.S. Patent 4,215,759 to Ricardo A. Diaz, the path to be followed by the vehicle is not a single guide wire, but comprises segmented, closed loop antennae. The vehicle is commanded to be displaced successively from antenna to antenna. A central processor sends steering and traction commands to only one antenna at a time for any particular vehicle. The two way communication disclosed between vehicles and a central controller is by way of relatively high frequency waves, for example, frequencies between 156,000 and 160,000 Hz, and the use of only standard transmitters, receivers and data decoders are disclosed.

US-A-4 284 941 proposes the pre-characterizing portion of Claim 1 and represents the state of the art. However this proposal is restricted to a communication system, in which computer-based functions are disclaimed (e.g. at column 5, lines 17-18). An object of the present invention is to provide an expansive capability in a communication system, in comparison with the state of the art lack of disabling vehicle transmitters when vehicle receivers are receiving, and vice versa. Another object is to enable faster transmissions of information or data, for given frequencies in waveforms digitally conveying such data.

### BRIEF SUMMARY AND OBJECTS OF THE INVENTION

In brief summary, the present invention comprises Claim 1, and may be embodied in a communications system, and related methods, for controlling a plurality of unmanned, task-performing vehicles as the same are caused to traverse variously along a network of guide wires, which system provides the following advantages: a logic and communications capability which provides for infinite expansion as to the number of guide wire loops and vehicles which comprise the system; accommodates polling of vehicles of the system not at predetermined times but only upon the occurrence of certain events; causes for high data transmission rates to occur over low frequency carriers; achieves low power transmission by varying the electrical characteristics of the guide wire system from time to time dependent upon the function to be performed by the guide wires; provides a high gain, low frequency antenna for unmanned task-performing guide wire vehicles and allocates the resources of the system in such a way that, upon the issuance of a command, resources are exclusively avaiable to only one vehicle to the exclusion of the other vehicles without further communication; for controlling a plurality of unmanned, task-performing vehicles along a network of guide wires, and wherein: the number of the guide wire loops and vehicles may be infinitely expanded.

In embodiments, vehicles of the system are polled, not at predetermined times, but only upon the occurrence of certain events, and data can be transmitted at an extraordinarily high rate over low frequency carriers. The data transmitted can be shaped by digital model so as to comprise cosine wave segments, and the resources of the system can be exclusively caused to be made available to a single vehicle of the system to the exclusion of other vehicles, at a common point in time. In the preferred embodiment, low power transmission is provided by varying the electrical characteristics of the guide wire system, from time to time dependent upon the function to be performed by the guide wires.

These and other objects and features of the present invention will be apparent from the detailed description taken with reference to the accompanying drawings.

### BRIEF DESCRIPTION OF THE DRAWINGS

Figure 1 is a perspective, presented in schematic form, of a presently preferred communications network showing a computer and a plurality of enclosures connected to guide wires for selectively controlling unmanned vehicles, in accordance with the present invention;
Figure 2 is a block diagram of the computer and one communications circuit forming a part of the system of Figure 1;
Figure 3 is a detailed block diagram of the line driver of Figure 2;
Figure 4 is a detailed block diagram of the receiver of Figure 2;
Figure 5 is a detailed block diagram of the transmitter of Figure 2;
Figure 6 is a circuit diagram of the junction of Figure 2;
Figure 7 shows the relationship between Figures 7a and Figures 7b;
Figure 7a is a portion of the circuit diagram of the transmitter, the detail block diagram of which is illustrated in Figure 4;
Figure 7b is the second portion of the transmitter circuit, the detail block diagram of which is illustrated in Figure 4;
Figure 8 illustrates the relationship between Figures 8a, 8b and 8c;
Figure 8a is a portion of the circuit diagram of the reciever, the detail block diagram of which is illustrated in Figure 4;
Figure 8b is a second portion of the circuit diagram of the receiver, the detail block diagram of which is illustrated in Figure 4;
Figure 8c is a third portion of the circuit diagram of the receiver, the detail block diagram of which is set forth in Figure 4;
Figure 9 illustrates the relationship between Figures 9a and 9b;
Figure 9a illustrates a first part of the line driver circuit, the detailed block diagram of which is set forth in Figure 3;
Figure 9b illustrates the remainder of the line driver circuit, the detailed block diagram of which is set forth in Figure 3;
Figure 10 is a block diagram illustrating the relationship between the computer, the primary enclosure and two secondary enclosures;
Figure 11 is a block diagram showing the relationship between the computer, the transmitter, the receiver and the receiver control;
Figure 12 is the receiver control circuit diagram;
Figure 13 is a block diagram of the vehicle communications electronics;
Figure 14 is a block diagram of a portion of the vehicle communications electronics; and
Figure 15 is a schematic representation of a vehicle antenna, in accordance with the present invention.

### DETAILED DESCRIPTION OF THE ILLUSTRATED EMBODIMENT

A purpose of the invention is to transmit digital data by means of a low frequency, low power wave which would not create transmission dead spots along the guide wire while maintaining a relatively high rate of data transmission. At least two distinct frequencies are chosen to represent different digital states. These frequencies may be multiples of each other, but do not need to be. The frequencies may be chosen to avoid the requirements of an FCC license. By way of example, in the preferred embodiment, a data transmission rate of 9600 BAUD was selected. Still by way of a presently preferred example, one cycle at 9600 Hz was selected to represent a digital state of"0", and two cycles at 19200 Hz were selected to represent a digital state of "1". Clearly, other transmission rates and frequencies could be selected within the scope of the invention, or the interpretation of the logical stated represented by the frequencies could be reversed without any fundamental change in the invention.

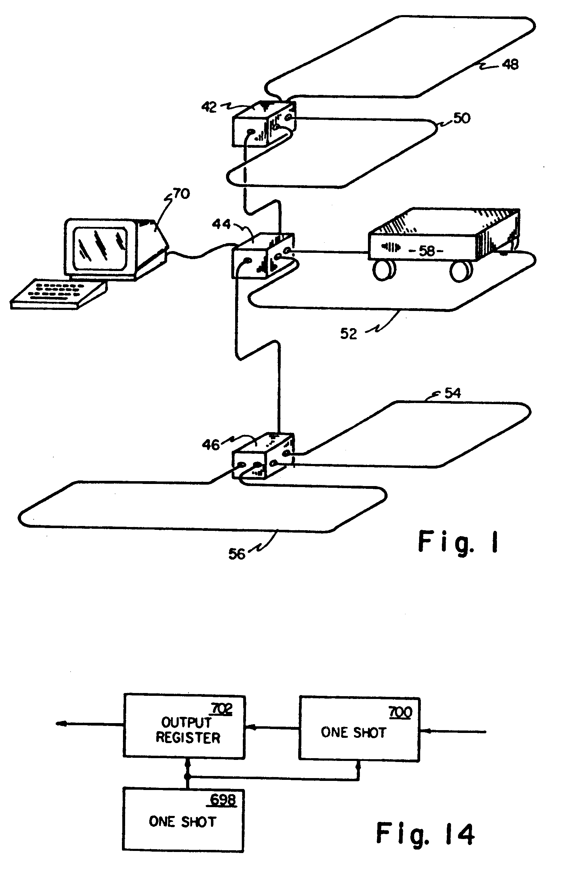

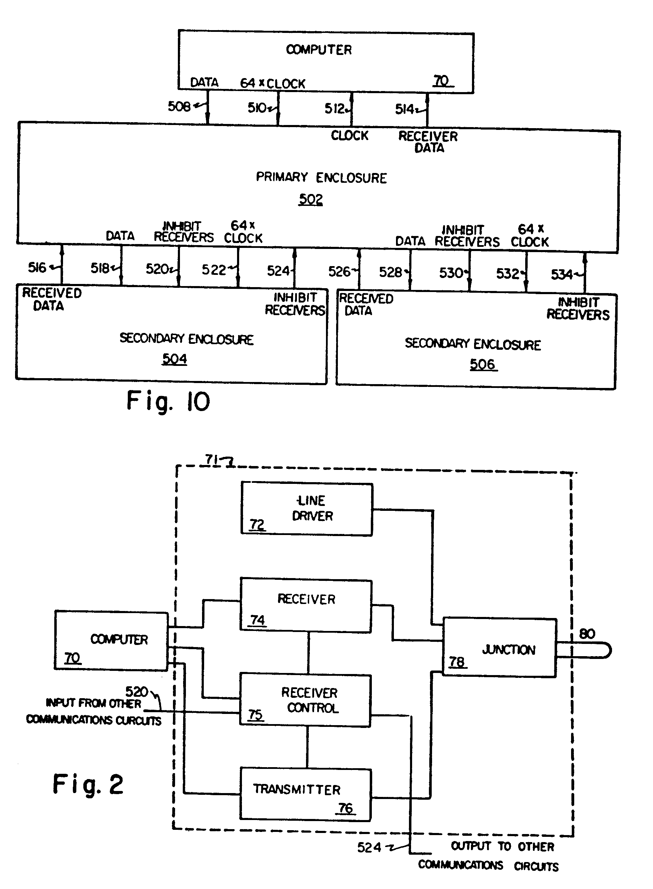

Referring to Figure 1 The preferred method for recognizing the distinct frequencies mentioned above comprises identifying positive-negative voltage transitions to determine the period of the wave. A wave form is transmitted to a vehicle 58 from a communications circuit 71 (see Figure 2) which is usually associated with a plurality of other communications circuits in an enclosure, such as enclosure 44, by means of a guide wire, such as guidewire 52, which serves as an antenna. A wave form from the vehicle 58 is picked up by the guide wire 52 and received by a communications circuit 71 in an enclosure 44. Whenever the guide wire is of significant length it has an impedance associated with it. The filtering effect of impendance causes the transitions between the frequencies mentioned above to be altered to another frequency, which is between the selected frequencies. The presence of a spurious frequency would cause errors in the recovery of transmitted data. Therefore the invention teaches that the data should be transmitted as cosine wave forms of substantially identical amplitude. Because the slopes of any two sinusoidial waves (either sine or cosine) at the maxima or minina are essentially equal (that is, essentially equal to zero), a transition between two wave segments of different frequencies but essentially equivalent amplitudes can be made at a maximum or minimum amplitude without significantly altering the frequency of either segment by inductance. Referring now to Figure 2, as more fully described below, the transmitter section 76 produces cosine wave segments, representing digital information. When the wave forms are recovered by the receiver section 74, the cosine segments are converted to sine segments to provide a positive-negative voltage transition at the beginning and end of each cycle. Inductive effects in the receiver section 74 are controlled within tolerable limits because of the relatively short distances between components in the receiver section 74.

A communications circuit 71 is shown in block diagram form in Figure 2. The circuits comprise a vehicle traffic control computer section 70, a transmitter section 76, a receiver section 74, a receiver control section 75 and a line driver section 72. The transmitter section 76, the receiver section 74 and the line driver section 72 are connected through a junction 78 to guide wire 80. The transmitter 76 accepts digital data from the vehicle traffic control computer 70 and transforms the data into a relatively low frequency, low power wave of at least 2 frequencies whose components are cosine periods. The receiver accepts data in a form similar to the form produced by the transmitter. It then shifts the data from a cosine wave to a sine wave by means of a differential amplifier. The resulting wave forms are processed to recover the digital data imposed thereon. The junction 78 presents favorable electrical characteristics to the wave forms transmitted by the transmitter section 76 or the line driver section 72 or received by the receiver section 74 as more fully set forth below.

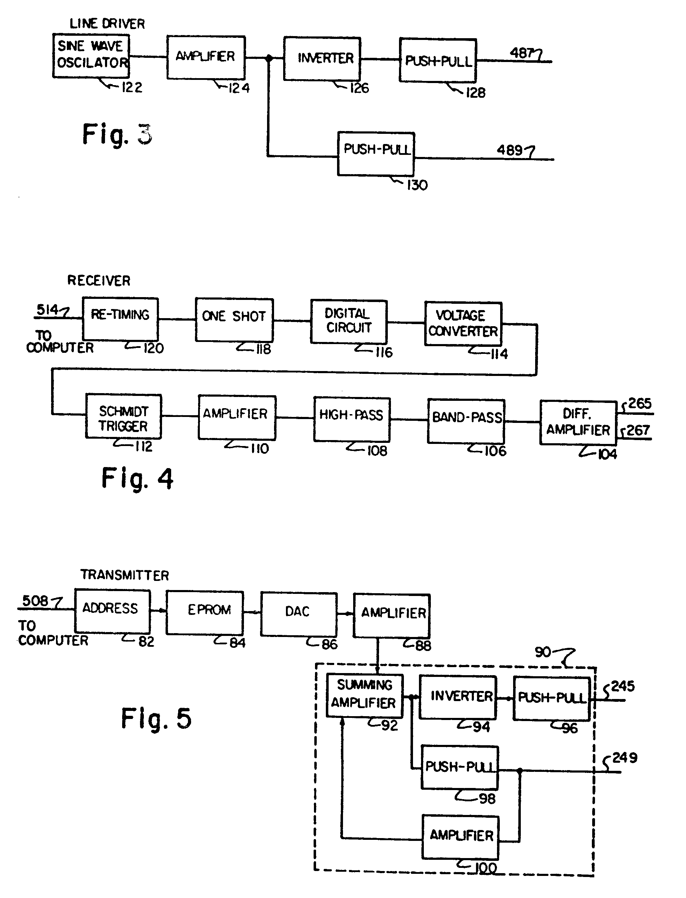

The transmitter section 76 has a connection to the vehicle traffic control computer 70, which provides the transmitter section 76 with input data and a clock signal at a suitable multiple of the highest data frequency employed, for example, 64 times the fundamental period of the highest data frequency. Referring now to Figure 5 based on the input from the vehicle traffic control computer 70, the address circuit 82 addresses a location in the Erasable Programable Read Only Memory 84 (EPROM). At unique address locations in the EPROM 84 a plurality of series of values representing discrete steps on a wave form are stored. In the preferred embodiment, the wave forms are cosine wave forms, but any desired wave form could be so stored without altering the invention. In response to a signal from the address circuit 82, the EPROM 84 will output a selected series of values, with each value transmitted at relatively equal intervals as synchronzied by the clock signal. The output of the EPROM 84 is input to a digital-to-analog converter 86 (DAC) which produces a cosine wave form in response to the values provided by the EPROM 84. The wave form produced by the DAC 86 is passed through at least one stage of amplification by an amplifier 88. The amplified wave form is passed to a push-pull amplifier with current feed back 90. This stage comprises a summing amplifier 92 which is part of the feed back operation, and two push-pull circuits 96 and 98, one of which is provided with a voltage inverter 94, thus providing that the operation of the push-pull circuits 96 and 98 will be 180° out of phase. The output of one side of the push-pull amplifier is sampled and amplified by a amplifier 100 and the amplified sample is fed back to the summing amplifier 92. The feed back described insures that the output of the push-pull amplifier retains the cosine wave form produced by the DAC 86. The wave form is then fed to the junction 78.

The receiver section 74 is also provided with a connection to the vehicle traffic control computer 70. The vehicle traffic control computer 70 provides the clock signal mentioned above and receives the output of the receiver section 74. The receiver section 74 is more fully set forth in Figure 4.

The receiver section 74 accepts an output from the junction 78 in the form of a complex wave. Data from a vehicle 58 is carried on the wave in the form of cosine-shaped wave segments of various frequencies as explained more fully below. The complex wave is input to a differential amplifier 104 which produces a sinusoidal wave corresponding in frequency to the cosine input. The sinusoidal wave is filtered through a band pass filter 106 and a high pass filter 108 to remove spurious wave forms and noise and to remove components attributable to the line driver section 72. The filtered sinusoidal wave is input to a Schmidt switching amplifier 112. By means of the Schmidt switching amplifier 112 the filtered sinusoidal wave is transformed into a square wave which corresponds to the data transmitted by a vehicle 58. The voltage converter 114 converts the amplitude of the square wave to TTL voltage levels for input to a digital circuit 116. The digital circuit 116 outputs a voltage pulse at each voltage transition of the square wave. The resulting series of pulses is sent to a retriggerable one-shot 118 which is set to time out if the series of pulses represents one frequency and not to time out if the series represents the other frequency. For example, in the exemplary embodiment, the retriggerable one shot 118 is set to time out on the pulses caused by the 9600 Hz transitions (about 2 pulses in a 50 micro second period) and not to time out on the pulses caused by the 19200 Hz transitions (about 3 pulses in a 50 microsecond period). The output of the retriggerable one shot 118 is processed by a re-timing circuit 120. The retiming circuit produces a signal of TTL voltage level. and of selected time-interval length. This process eliminates any imprecision in the timing of the data bits which may have been accumulated in the processes of encoding, transmission, reception and decoding. In the exemplary embodiment, the re-timing circuit 120 is set to output a "0" for 104 microseconds duration with two transition time outs by the retriggerable one shot 118. This represents one complete cycle at 9600 Hz. The re-timing circuit 120 outputs a "1" when there are no transition time outs in a given interval, representing 2 complete cycles at 19200 Hz. The duration of the "O" and "1" digital state signals is controlled by the re-timing circuit 120, and not by the actual frequency of the received wave, which may not be identically equal to the frequency of the transmitted wave because of accumulated errors. The output of the re-timing circuit 120 represents the recovered digital data which can then be procesed by a vehicle traffic control computer 70.

A third component of the communication circuit is a line driver section 72. The components of the line driver section 72 are shown in block diagram form in Figure 3. Selected guidance frequencies are generated by a plurality of sine wave oscillators 122. In the exemplary embodiment, a frequency of 964 Hz and a frequency of 1155 Hz were selected. The guidance frequencies are chosen to be distinguishable from each other and from the communications frequencies, to optimize transmission, and to minimize both power requirements and the creation of dead spots over the guide wire 80 and may be chosen to avoid FCC regulatory restrictions. Nevertheless, the frequencies may be varied without altering the invention. The output of the sine wave oscillator 122 is amplified by at least one stage of amplification at amplifier 124. The amplified wave is then input to push-pull amplifier which is provided with two push-pull circuits 128 and 130, one of which is provided with a voltage inverter 126. The voltage inverter 126 assures that the out put of the push-pull circuits 128 and 130 will be 180° out of phase. The guidance wave is then fed to a junction 78.

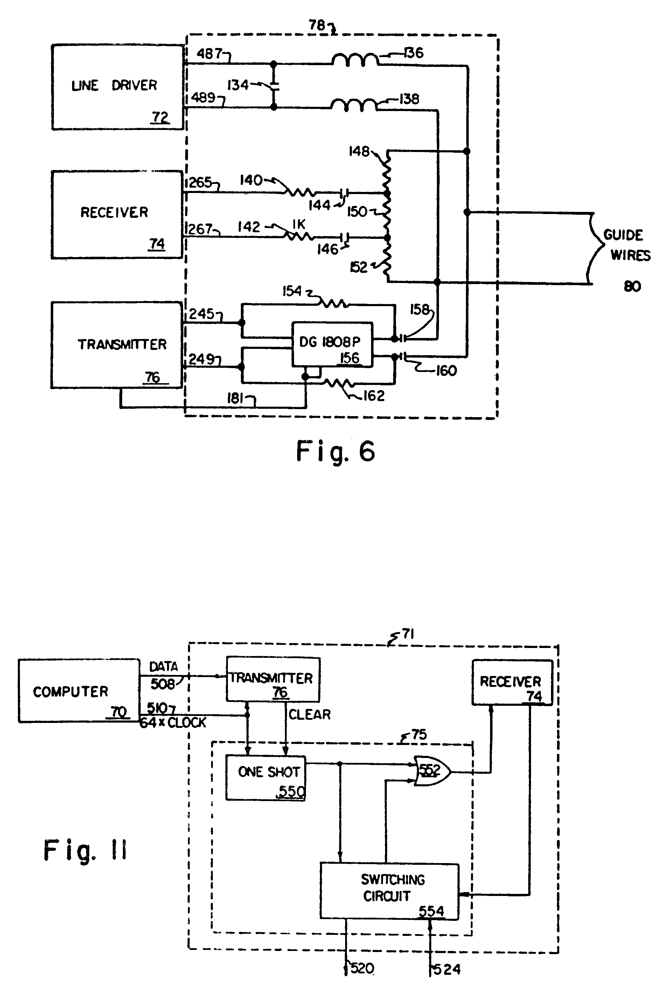

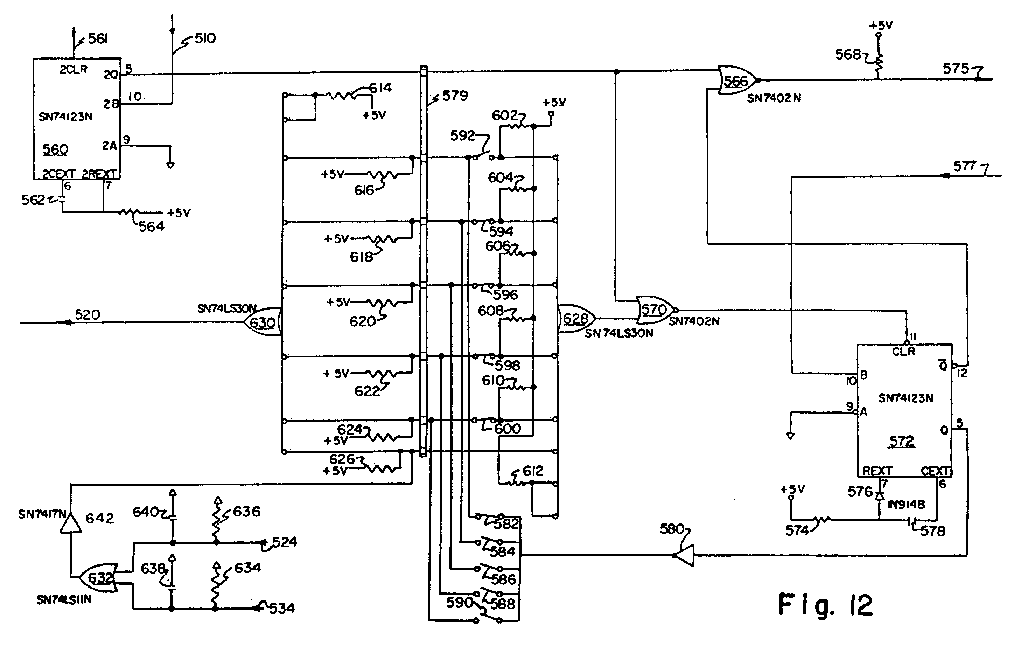

The transmitter section 76, the receiver section 74 and the line driver section 72 are connected to a guide wire 80 through a junction 78. The transmitter section 76 is connected to the junction 78 through lines 245 and 249. The receiver section 74 is connected to the junction 78 through lines 265 and 267. The line driver section 72 is connected to the junction through lines 487 and 489. The junction 78 provides different electrical characteristics for the transmitter section 76, the receiver section 74 and the line driver section 72. The junction 78 is shown in circuit form in Figure 6. The line driver section 72 is coupled to the guide wire 80 across a pair of inductors 136 and 138 and a capacitor 134 which cause the guide wire to have a relatively low impedence as viewed from the line driver section 72. In the exemplary embodiment, inductors 136 and 138 have values of 500 uH each and capacitor 134 has a value of 1.5 uf, for example. The receiver section 74 utilizes the guide wire 80 as an antenna to receive a signal transmitted by a plurality of vehicles 58. The guide wire 80 must be given a high impedence when viewed from the receiver section 74, so that a low power transmission from the vehicles 58 can be received. In the exemplary embodiment, this result is accomplished by three resistors 148, 150 and 152 in series with two capacitors 144 and 146 and two additional resistors 140 and 142 in parallel, as shown in Figure 6. Values of the components may be altered without changing the invention. By way of example, in the exemplary embodiment, resistors 148 and 152 have values of 100 ohms, resistor 150 has a value of 47 ohms, resistors 140 and 142 have values of 1,000 ohms and capacitors 144 and 146 have values of 0.1 uf. The transmitter section 76 needs variable characteristics depending on whether it is transmitting data or not. In line with the transmitter section 76, the junction 78 has an analog FET switch 156, for example a DG 180BP available from Siliconix that disconnects the transmitter section 76 from the guide wire 80 when a transmission is not in progress. The analog FET switch 156 is connected to a one shot 550, Fig. 11, that is triggered by a 64 X clock 510 in the vehicle traffic control computer 70 by line 510. When the 64 X clock signal is present on line 510, the vehicle traffic control computer 70 is transmitting and the analog FET switch 156, Fig. 6, is closed. Otherwise, the analog FET switch 156 is open.

Having described the characteristics of the transmitter section 76, receiver section 74 and the line driver section 72 above, a more detailed description of a particular embodiment is set forth below. A detailed description of the receiver control circuit 75 is deferred until the relationship between communications circuits has been described. In accordance with prior art, particular values of components may be altered or different integrated circuit chips may be employed without altering the invention. Moreover, in accordance with prior art, various means for monitoring the performance of the circuits described herein could be provided. Since such means are well known in prior art, they are not described herein.

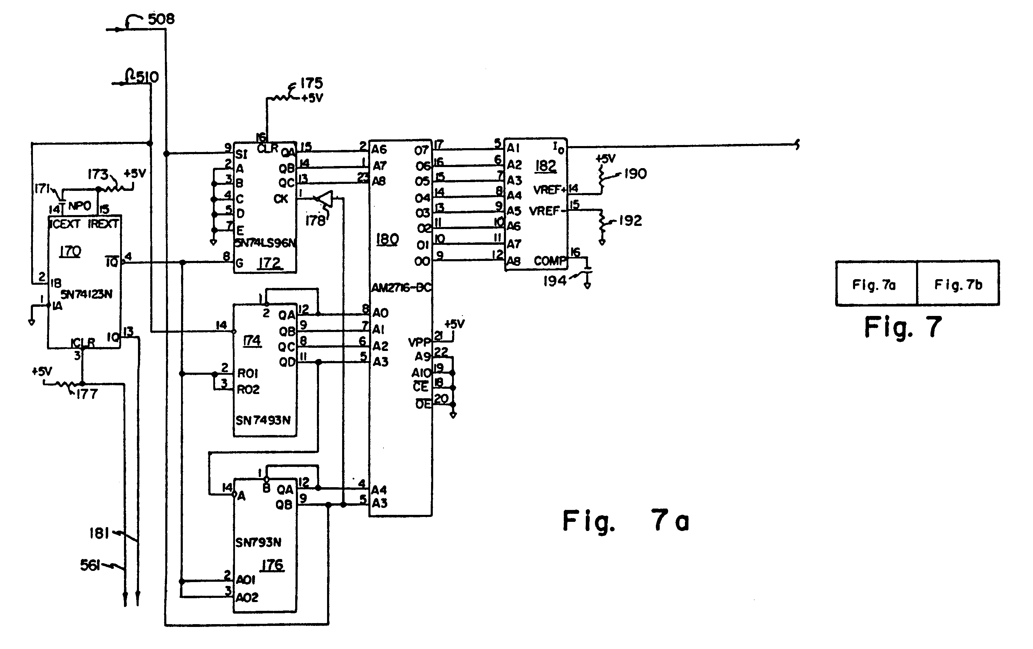

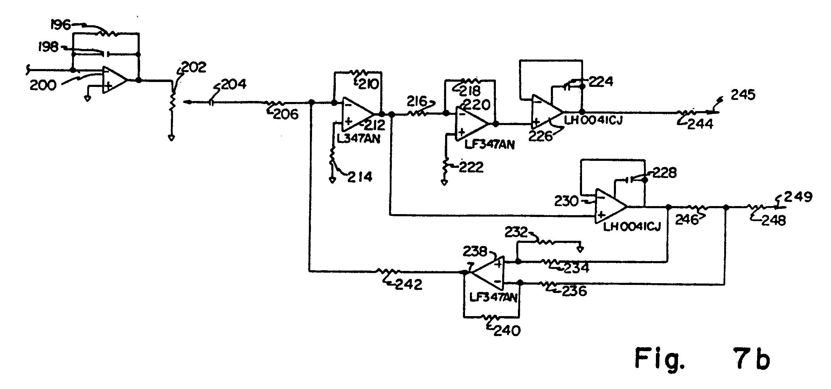

Reference is now made to Figure 7. In the transmitter section 76, the address circuit 82 is provided with a retriggerable one shot 170, which may be a SN74123N available from Texas Instruments, for example, which is used to reset and enable various integrated circuits when data is being transmitted. At pin 1, the retriggerable one shot 170 is connected to ground. Pin 2 is provided with a signal through line 510 from the 64X clock. Pins 14 and 15 are connected to a power supply through an appropriate capacitor 171 and resistor 173. Pin 4 provides output to clear a shift register 172 and two divide-by-sixteen counters, 174 and 176, described below whenever the signal from the 64 X clock is interrupted. Pin 3 of the retriggerable one shot 170 is connected to a receiver control circuit 75 through lines 561. The operation of the receiver control circuit 75 is described in detail elsewhere. Line 3 is connected to a pull-up register 177. When the retriggerable one shot 170 is in the cleared state, it produces a signal at pin 13 used to activate the FET switch 156 in the junction via line 181, thereby reflectively disconnecting the transmitter 76 from the guide wire 80.

The shift register 172, which may be an appropriate integrated circuit such as an SN 74LS96N available from Texas Instruments, is connected to the vehicle traffic control computer 70 through line 508. The clear is disabled with a voltage source through a resistor 175. Said shift register 172 is capable of storing the last bit transmitted, the current bit and the next bit. The status of all three bits can be used to select an address in the EPROM 180 containing a representation of a wave form in the form of a series of numbers for representing the current bit which could compensate for inductance effects caused by the leading and trailing bits. The number of stored wave forms is dependent on the number of distinct combinations of bits. This refined wave may be employed in certain embodiments of the invention, but in the preferred embodiment, a wave form based solely on the character of the current bit has been found to be sufficiently accurate.

The divide-by-16 counters 174 and 176 are clocked by the 64X clock to enable the counters 174 and 176 to serially address 64 memory locations in the EPROM 180 which contain discrete values representing points on a particular cosine wave form. In response to the input provided by the shift register 172 and the divide-by-16 counters 174 and 176, an EPROM 180, such as AM 2716-DC available from Advanced Micro Devices, produces a series of discrete values at time intervals equal to 1/64 of the period of the lowest communications frequency. The series of values is inputted to a digital-to-analog converter 182 (DAC) such as a DAC0808LCN available from National Semiconductor. The DAC 182 is provided with appropriate biasing, according to the prior art as represented by resistor 190, resistor 192 and capacitor 194. The DAC 182 produces a cosine wave form based on the series of discrete values provided by the EPROM 180. The cosine wave form is amplified by an operational amplifier 200 (Fig. 7b), such as LF347AN available from National Semiconductor. The operational amplifier 200 is biased with appropriate capacitor 198 and resistor 196. A variable resistor 202 is used to control the input to the push-pull amplifier 90. A summing amplifier 212, such as a LF347AN is used to insure that the output of the push-pull amplifier 90 retains its characteristics of the input wave as a cosine wave segment. The summing amplifier 212 is provided with feed back from the output of one push-pull circuit such as push-pull circuit 230 through a current amplifier 238, such as LF347AN. Appropriate biasing resistors are provided in accordance with prior art. An inverter 220, such as LF 347AN biased substantially as shown, will invert the incoming wave signal, causing the function of the two push-pull amplifiers 226 and 230 to be 180° out of phase. The push-pull amplifiers may be an integrated circuit such as LH0041CJ available from National Semiconductor, connected substantially as shown. The use of the push-pull circuits 226 and 230 permits the wave form to be transmitted at lower levels.

Resistors 244, 246 and 248 provide loads for the push-pull amplifiers 226 and 230 in accordance with prior art. The output of the transmitter section 76 is carried to the junction 78, which is more particularly described above, by lines 245 and 249.

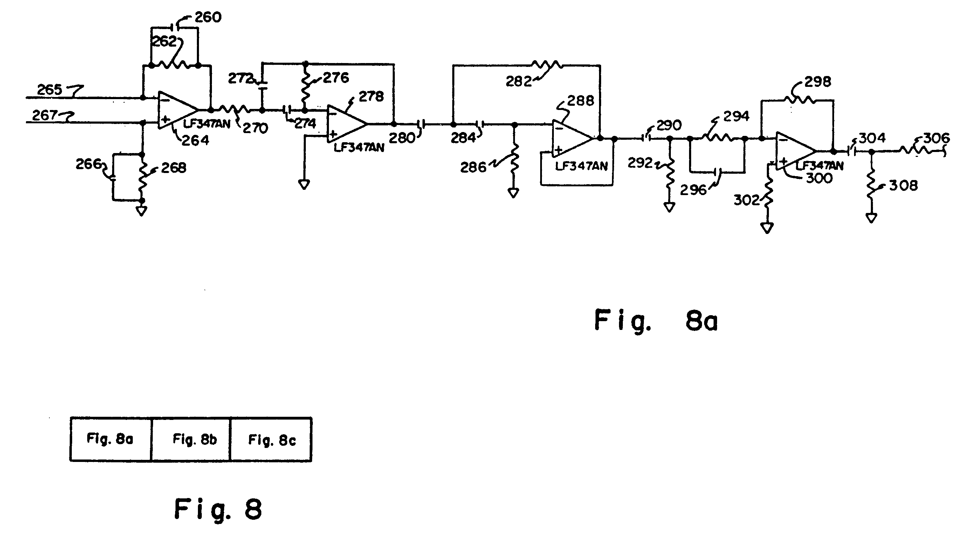

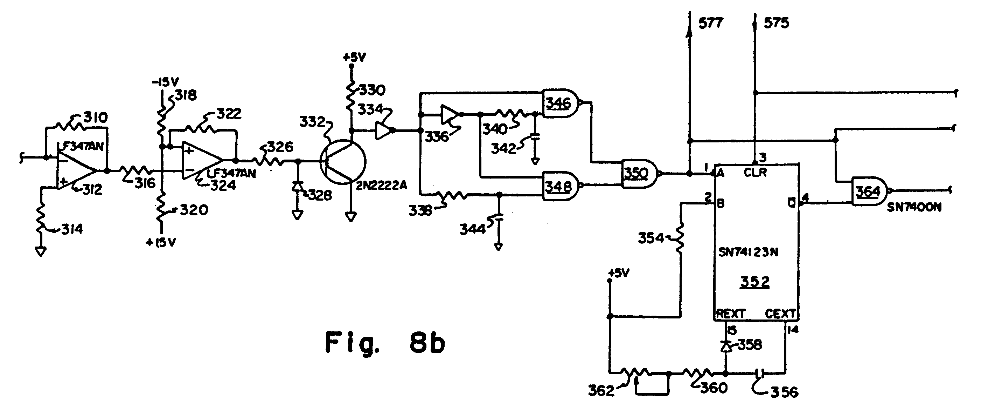

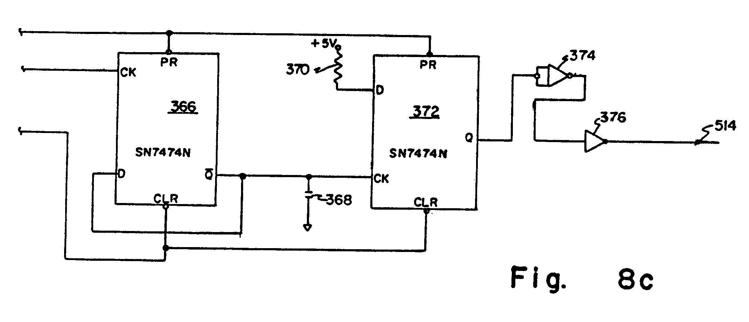

Reference is now made to Figure 8. In the receiver section 74, the differential amplifier 104 is connected to the junction 78 via lines 265 and 267. The differential amplifier 104 is comprised of an operational amplifier 264 such as LF347AN, with biasing resistor 262 and capacitor 260 according to the prior art. The positive input of operational amplifier 264 is grounded through a capacitor 266 and resistor 268 in parallel. The band pass filter 106 comprises an operational amplifier 278 such as LF347AN with appropriated biasing capacitors 272 and 274 and resistors 270 and 276, according to prior art.

The high pass filter 108 is comprised of an operational amplifier 288 such as LF347AN and suitable resistors 282 and 286, capacitors 280 and 284 and grounding according to prior art. Capacitor 290 is a coupling capacitor located on the output side of the high pass filter.

The primary purpose of the high pass filter 108 is to pass the communications frequencies while rejecting the guide frequencies produced by the line driver 72. Resistor 282 and capacitor 284 should be chosen to eliminate frequencies substantially below the lowest selected communications frequency.

After filtering, the wave form may be passed through a plurality of amplifiers 110. In the exemplary embodiment, two amplification stages are disclosed, comprising identical operational amplifiers 300 and 312 (Fig 8b) such as LF347AN with appropriate biasing resistors and capacitors according to the prior art.

The amplified wave form is passed to the Schmidt switching amplifier 112 (Fig 4) comprising an operational amplifier 324 such as LF347AN (see Fig 8b) biased by a resistor 322 according to the prior art. The positive input of the operational amplifier is provided with a normalized ground by creating a voltage drop between a negative voltage source and a positive voltage source of equal amplitudes. In the exemplary embodiment, the voltage drop is occasioned by resistors 318 and 320. Resistor 326 provides a load for the operational amplifier. The output of the Schmidt switching amplifier 112 is a square wave which corresponds to the input wave. The voltage amplitude of this square wave is adjusted to TTL levels by the voltage converter 114. The voltage converter 114 (Fig. 4) comprises a transistor 332 (Fig.8b) such as a 2N2222A with the emitter grounded. The collector is biased to a voltage source through a resistor 330. The output of the voltage convertor 114 is passed through a digital circuit 116 which produces a pulse corresponding to each voltage transition on the square wave. The digital circuit 116 comprises a voltage inverter 334 such as an SH7404N available from Texas Instruments connected to a NAND gate 348 such as a SN7400N available from Texas Instruments. A load resistor 338 is inserted between the inverter 334 and the NAND gate 348. The NAND gate is also provided with a ground through a capacitor 344. The combination of resistor 338 and capacitor 344 alters the time-constant of the section of the digital circuit 116 between the inverter 334 and the NAND gate 348, which causes the square wave on that segment to be delayed slightly.

The output of the voltage inverter 334 is hard-wired through a second voltage inverter 336, for example a SN7400N. The second voltage inverter 336 is connected to a second NAND gate 346 through a second loading resistor 340 and grounding capacitor 342. The first inverter 334 is also hard-wired to the second NAND gate 346. The output of the second voltage inverter 336 is hard-wired to an input of the first NAND gate 348. The output of the first NAND gate 348 and the second NAND gate 346 are connected to the input of a third NAND gate 350. The inputs of the first and second NAND gates 348 and 346 which contain a resistor capacitor combination (resistors 338 and 340 and capacitors 342 and 344) are slightly delayed with respect to the other inputs of the NAND GATES 348 and 346. The output of the first NAND gate 348 produces a positive voltage peak for a rising voltage transition while the output of the second NAND gate 346 produces a voltage spike for a falling voltage transition. These two outputs are combined through the third NAND gate 350.

The output of the digital circuit 116 is transmitted via line 577 to the receiver control section 75, whose function is explained below.

The output of the digital circuit 116 is also input to a retriggerable one shot circuit 118 which comprises a retriggerable one shot 352 such as SN74123N which is connected, in the exemplary embodiment, to time out on pulses which represent a 9600 Hz wave and not to time out on pulses which represent a 19200 Hz wave. This configuration is accomplished by use of capacitor 356 diode 358 such as a 1N914B, and variable resistor 362. End resistors 354 and 360 are provided to assure linearity of response over the range of adjustments of resistor 362. A NAND gate 364 is provided as part of the receiver control circuit described in greater detail elsewhere herein. The output of the retriggerable one shot circuit 118 is essentially two time outs in each cycle at 9600 Hz and no time outs in each cycle at 19200 Hz. This signal is converted to digital information and of appropriate voltage levels and time intervals by the retiming circuit 120. The retiming circuit 120 comprises a synchronized clock divider 366 (Fig 8c) which delays clocking of data until the second half of an actual input cycle, and an output register 372 which is synchronously set true by each second 19200 Hz pulse output from the synchonizing clock divider 366 and which is asynchronously reset false on the trailing edge of a 9600 Hz pulse.

Retriggerable one shot 352, synchronizing clock divider 366, and output register 372 are provided with an input via a line 575 (and see Fig 12) from the receiver control section 75, whose function is explained below. The output of the receiver section 74 is transmitted to the vehicle traffic control computer 70 over a communications line 514 (Fig 8c).

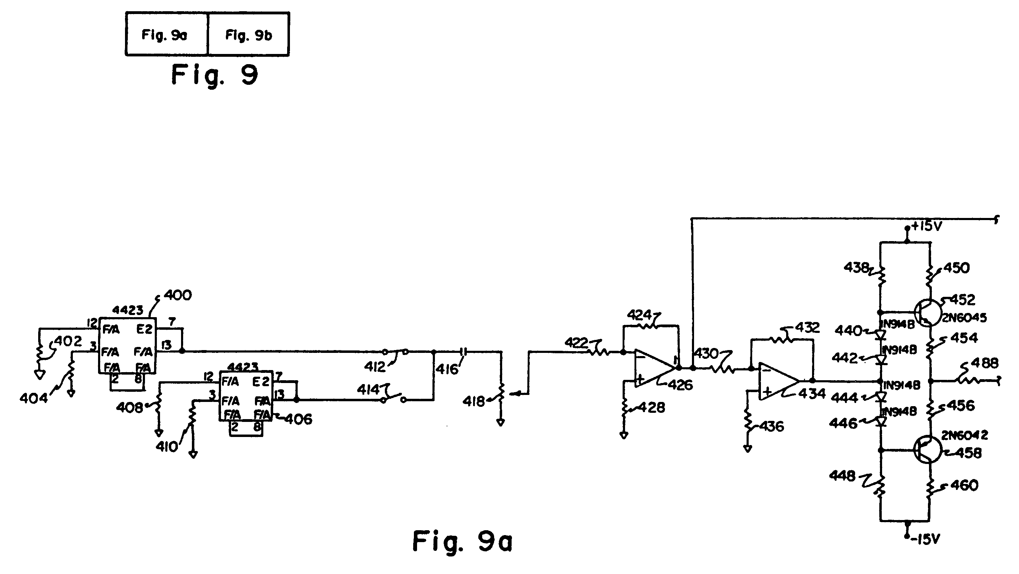

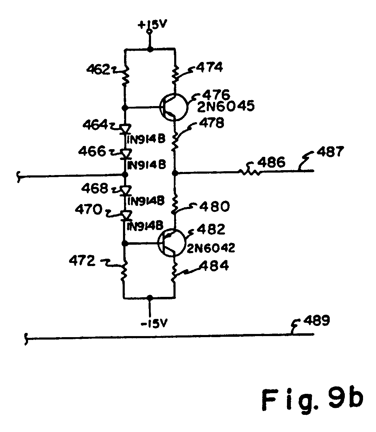

Reference is now made to Figure 9. In the line driver section 72, an initial wave form is produced by a plurality of sign wave oscillators 122. Sign wave oscillators are comprised of programable oscillators 400 and 406 such as 4423 from Buhr-Brown. In the preferred embodiment, two oscillators are used which have been provided with appropriate grounding through a plurality of resistors 402, 404, 408 and 410 to achieve output frequencies of 964 Hz and 1155 Hz. Switches 412 and 414 permit selection between the two frequencies. The amplitude of the output frequency is coupled through capacitor 416 and variable resistor 418. Variable resistor 418 is used to tune the line driver section 72 to the particular guide wire 80 to which it is attached. At least one stage of amplification is provided by an amplifier 124. In the preferred embodiment, amplifier 124 is comprised of an operational amplifier 426 such as LF347AN provided with appropriate biasing and load resistors 422, 424 and 428 according to the prior art, substantially as shown. The amplified guide wave is passed from the amplifier 124 to a push-pull amplifier 132 comprising two push-pull circuits 128 and 130, and an inverter 126. The inverter 126 comprises an operational amplifier such as LF347AN with appropriate biasing resistors 430, 432 and 436 according to the prior art. The push-pull circuits 128 and 130 may be provided by commercially available integrated circuits. In the preferred embodiment, however, full scale components were employed to adequately handle the applied loads without distortion. In the preferred embodiment, both push-pull circuits 128 and 130 are identical and, therefore, only one is hereinafter described.

Push-pull circuit 128 is comprised of a series of diodes 440, 442, 444 and 446 with the input wave form appearing at the center of the series of diodes. In the exemplary embodiment, a suitable commercially available diode is 1N914B available from National Semiconductor. The two ends of the diode series are connected through substantially similar transistor circuits, which are provided with appropriate biasing resistors according to the prior art. The base of transistor 452 is connected to one end of transistor 458 are similarly connected through resistors 448 and 460. The voltage source provided for transistor 458, however, is a negative voltage source. The emitters on transistors 452 and 458 have an opposite sense. An appropriate commercially available embodiment of transistor 452 is an 2N6045 available from National Semicoductor. An appropriate commercial embodiment for transistor 458 is a 2N6042, available from National Semiconductor. The emitters of the transistors 452 and and 458 are connected through resistors 454 and 456. The output of the push-pull circuit 128 is connected between resistors 454 and 456.

The second push-pull circuit 130 is shown, in the exemplary embodiment to be substantially identical to the push-pull circuit 128 and comprises diodes 464, 466, 468, 470; transistors 476 and 482; and resistors 462, 472, 474, 478, 480 and 484, which have equivalent values and commercially available components comparable to those disclosed with regard to push-pull circuit 128. Each push-pull circuit 128 and 130 is provided with a load resistor 488 and 486, respectively, which each have a preferred value of 4.99 ohms.

The output of the push-pull amplifier 132 is connected to the junction 78 via lines 487 and 489. The operation of the junction has been described above.

A guide wire vehicle communications system employing the communication circuits described comprises at least one vehicle traffic control computer 70 connected to a plurality of communications circuits 71 each of which is connected to a single guide wire 80. In addition to controlling one guide wire 80, each communication circuit 71 can be connected to a plurality of communication circuits which are controlled through the first communication circuit 71. Thus, the communication circuits can form a tree with the vehicle traffic control computer 70 as the root. In the exemplary embodiment, provision has been made for each communication circuit 71 to be connected to as many as two subsets of communication circuits, but additional subsets could be provided in accordance with the invention. A subset of communication circuits comprises a plurality of communication circuits. Referring to Figure 10, a plurality of communications circuits 71 may be physically grouped together in at least one enclosure such as primary enclosure 502. In the preferred embodiment provision has been made for up to five different communication circuits 71 in any enclosure. The different communication circuits 71 are distinguished electrically by setting dip switches which are provided in the preferred embodiment. In order to keep transmission and reception from both the vehicle traffic control computer 70 and each of a plurality of vehicles 58 mutually exclusive, a set of communications protocols have been adopted in the invention. These protocols are implemented by fully interlocked receive inhibit and transmit inhibit signals.

One protocol for transmission gives priority to all transmissions of the vehicle traffic control computer 70. No data is transmitted by any vehicle 58 when data is being transmitted by the vehicle traffic control computer 70. All data transmitted by the vehicle traffic control computer 70 is transmitted globally, that is, it is transmitted by each and every communication circuit 71 on the floor network and is carried on each guidewire, such as guide wires 48 through 56, regardless of the vehicle 58 to which it is directed. However, because the guidewires 48 through 56 are used both as transmitting antennas and as receiving antennas, any transmission by the vehicle traffic control computer 70 is picked up by the receiver sections 74 of each communication circuit 71. To avoid feedback, the system interrupts the output of each receiver section 74 before it is communicated to the vehicle traffic control computer 70. Referring now to Figure 11, whenever the vehicle traffic control computer 70 transmits data, it also transmits a 64 X clock signal. This signal is sensed by a one shot circuit 550, which then transmits a signal via line 572 throughout the system which interrupts the output of the receiver section 74 at a synchronized clock divider 366 and an output register 372 and at retriggerable one shot 352.

To avoid data collision, a vehicle 58 only attempts to transmit data to the vehicle traffic control computer 70 when it has been polled by the vehicle traffic control computer 70. When a vehicle 58 begins to transmit data, the transmission is picked up by a particular guide wire 52 and is carried to a particular receiver section 74 in a particular communication circuit 71 in a particular enclosure 44. Reception of data by a receiver section 74 is detected as more fully described below and an inhibit reception signal is sent to all other communication circuits 71 in the system. This has the effect of interrupting the output of all receiver sections 74 in the system except that receiver section 74 which was first in time to begin receiving data. As a consequence, only data from one particular vehicle 58 will be received by the vehicle traffic control computer 70 at any particular time.

The vehicle traffic control computer 70 and the subsets of communication circuits are connected to one another through standard RS422 ports. These configurations are well known in the industry. A representative port would be the Motorola MC3486P and MC3487P. A port should be used between any set of circuits which is separated by any significant distance. In the preferred embodiment, an RS422 port was chosen because of the selected frequencies. However, if other frequencies were selected, other standard ports or port configurations would be appropriate, such as an RS232 port. Because the use of these ports is well known in the art, further discussion is omitted.

The communication circuits in any enclosure may be connected together through a bus. Moreover, the communication circuits may be embodied on one or more circuit boards in accordance with prior art. Where a bus is employed, prior art teaches that bus drivers or buffers may be necessary. Since this technology is well known in the prior art, they are generally omitted in the discussion of the circuits herein.

The communications links between components of the guide wire communications system are shown in block diagram form in Figure 10. The vehicle traffic control computer 70 is connected to a plurality of primary, enclosures via communications ports. In the preferred embodiment, the ports comprise RS422 standard communications ports. The primary enclosure 502 contains a set of communication circuits 71. The primary enclosure 502 is connected to the vehicle traffic control computer 70 by a cable containing at least lines 508, 510, 512 and 514. Line 508 is used to transmit data from the vehicle traffic control computer 70 to the primary enclosure 502, and, as will be explained hereafter, from the primary enclosure 502 to a plurality of secondary enclosures, for example, secondary enclosure 504 and secondary enclosure 506. Line 510 carries a timing signal from the vehicle traffic control computer 70 to the primary enclosure 502 which is also transmitted to secondary enclosures such as secondary enclosure 504 and secondary enclosure 506. Line 512 carries a clock signal from primary enclosure 502 to the vehicle traffic control computer 70. In the preferred embodiment, this signal is 9600 Hz, equivalent to the effective BAUD rate of data transmission across the guide wires 48 through 56. This signal is produced in the transmitter section 76 of a communication circuit 71. In the transmitter section 76, two divide-by-16 counters 174 and 176 are provided with an input from the 64 X clock, carried on line 510. A single voltage pulse is produced at pin 9 of divide by 16 counter 176 for each 64 pulses provided by the 64 X clock. In the preferred embodiment, this produces a clock frequency of 9600 Hz which is fed back to the vehicle traffic control computer 70 across line 512 for the purpose of providing synchronized timing. Such synchronized timing is a function of the vehicle traffic control computer 70 and is known in the prior art. Computer 70 may be an Intel 310. Line 514 carries data received by any of a plurality of receiver sections 74 in any enclosure throughout the system.

Primary enclosure 502 is connected through a plurality of ports to a plurality of secondary enclosures such as secondary enclosures 504 and 506. In the preferred embodiment these ports are RS422 ports, but as set forth above, other standard or non-standard ports may be utilized. There are five lines connecting a primary enclosure 502 and a secondary enclosure, such as secondary enclosure 504. Line 516 carries data from any of a plurality of receiver sections 74 to the primary enclosure 502. Internal to primary enclosure 502, line 516 is connected by a bus to any similar line such line 526 and to line 514, which carries data to the vehicle traffic control computer 70. Line 516 is electrically equivalent to line 514, and carries a subset of the data carried by line 514.

Line 518 is connected by a bus internal to the primary enclosure 502 to similar lines such as line 528 and to line 508. Line 518 is equivalent to line 508 and carries the same data as is carried-on line 508.

Line 522 is connected by a bus internal to the primary enclosure 502 lines such as to line 532 and to line 510 and is used to carry the 64 times clock signal. The signals on each of lines 510, 522 and 532 are equivalent.

Line 520 is used to interrupt the output of any receiver section 74 contained in enclosure 504 or in any enclosure logically subordinate to enclosure 504. Line 520 carries a signal whenever the 64 X clock is activated which implies that the vehicle traffic control computer 70 is transmitting, or when any receiver section 74 has begun receiving data from a vehicle and the receiver 74 is not located either in enclosure 504 or in any enclosure logically subordinate to enclosure 504.

If a transmission is received by a receiver section 74 contained in enclosure 504, for example, a signal will be generated which will interrupt the output of all other receiver sections 74 contained in enclosure 504. A signal will also be transmitted across line 524 to the primary enclosure 502. In enclosure 502, the signal is transmitted via lines such as line 530 to all other secondary enclosures except the originating secondary enclosure 504 and all enclosures which are subordinate to secondary enclosure 504. The signal is also transmitted by secondary enclosure 504 to all enclosures subordinate to secondary enclosure 504. The transmission of an inhibit receive signal interrupts the output of all receiver sections 74 except that receiver section 74 which was first in time to receive data.

The manner of connecting enclosures can be extended in a logical tree architecture. As to any enclosures connected below a secondary enclosure such as secondary enclosure 504 and, therefore, logically subordinate to it, secondary enclosure 504 would perform the same functions that primary enclosure 502 performs with respect to secondary enclosure 504.

The operation of line 520 and lines such as line 524, for example, are controlled by a receiver control circuit 75 which is provided in connection with each communciation circuit. A receiver control circuit 75 is more particularly described below, in connection with Figure 11 which shows a block diagram of a single communication circuit with connections as if that communication circuit were located in primary enclosure 502. As explained above, the operation of the circuit in any subordinate enclosure is analogous, requiring the substitution of the relevant line numbers. The vehicle traffic control computer 70 transmits data to the communication circuit 71 over line 508 and a 64 X clock signal over line 510. Inside the communication circuit 71, line 510 is connected to both the transmitter section 76 and the receiver control circuit 75. The transmitter section 76 is configured to provide a signal from a retriggerable one shot 170 on line 561 which clears a retriggerable one shot 550 in the receiver control circuit 75. The retriggerable one shot 550 is also connected to the 64 times clock by way of line 510. Said retriggerable one shot 550 is activated whenever the 64 time clock signal is present on line 510. The output of the retriggerable one shot circuit 550 is sent to both an OR gate 552 and a switching circuit 554 whose operation shall be described in more detail below. The OR gate 552 receives an additional output from the switching circuit 554. The output of the OR gate 552 is connected to the receiver section 74, and in particular, to retriggerable one shot 352 and flip-flops 366 and 372 via line 575. A true state produced by the OR gate 552 prevents the output of the receiver section 74 from being communicated to the vehicle traffic control computer 70. The switching circuit 554 receives an input from the retriggerable one-shot circuit 550, and from the receiver section 74 via lines 577, and from subordinate enclosures such as secondary enclosure 504 via line 524, for example, and from other communications circuits in the same enclosure via the bus 579. If the switching circuit 554 receives a signal from any of the aforementioned sources, (the retriggerable one-shot circuit 550, the receiver section 74, line 524 or the bus 579), it will output a signal on line 520 which will shut off the output of any receiver sections in any communication section subordinate to it. If a signal is received by the switching circuit 554 on line 524, the switching circuit will generate a signal to the OR gate 552 which will prevent output of the receiver section 74.

An exemplary embodiment of the receiver control circuit 75 and in particular the switching circuit 554 is set forth below with reference to Figure 12.

The receiver control circuit 75 receives a 64 X clock signal on line 510 to a retriggerable one shot 560 such as an SN74123N. The retriggerable one shot 560 is provided with capacitor 562 and resistor 564 which adjust the time constant of the retriggerable one shot 560. The retriggerable one shot 560 is also provided with a connection to the transmitter section 74 and specifically to retriggerable one shot 170 via line 561 so that retriggerable one shot 560 can be cleared before the transmission of a new data bit through the transmitter section 74. The output of the retriggerable one shot 560 is carried to OR gates 566 and 570, which may be integrated circuits such as SN7402N available from National Semiconductor. OR gate 566 is also connected to a retriggerable one shot 572 which may be a SN 74123N and whose function will be explained in detail below. The output of OR gate 566 indicates that either the vehicle traffic control computer 70 is transmitting data or that another receiver section in the floor circuit is receiving data and turns off the output of the receiver section 74 via line 574 as described above. Resister 568 is provided as a pull-up resistor according to the prior art.

OR gate 570 produces a true output whenever the vehicle traffic control computer 70 is transmitting data or any other receiver section is receiving data. A true output of OR gate 570 clears retriggerable one shot 572. The cleared state of retriggerable one shot 572 produces a positive output which is conducted to OR gate 566. The function of OR gate 566 is described above. Retriggerable one shot 572 is also provided with an input from the digital circuit 116 of the receiver section 74 via line 577. When the receiver section 74 is receiving data, the aforesaid input is a stream of pulses at a rate at least twice as fast as the slowest communications frequency. The time constant of retriggerable one shot 572 is set by means of resistor 574, diode 576 and capacitor 578 to respond to pulse streams with rates at least as high as the rate associated with the lowest communications frequency. In the preferred embodiment, the lowest communications frequency is 9600 Hz. The output of retriggerable one shot 572 is communicated by means of a bus 579 in the preferred embodiment. In the preferred embodiment, each receiver control circuit 75 is provided with a plurality of switches 582 through 600 which are used to configure the communications circuit 71 so that a plurality of communications circuits may be connected in a single enclosure such as primary enclosure 502. In the example in Figure 12, two sets of five switches are shown which would permit up to five communications circuits 71 to be inserted in any particular enclosure, such as primary enclosure 502. A greater or lesser number of switches could be provided, however. In accordance with prior art, pull-up resistors 602 through 612 and 614 through 626 are provided to accommodate the transfer of data across the bus 579. When a transmission is received in receiver section 74, all other receiver sections contained in the same enclosure have their output interrupted as described below. In Figure 12, only switch 592 of the set of switches 592 through 600 is shown to be open. In another receiver control circuit contained within the same enclosure, the switch analogous to switch 592 would be closed and one of the other switches 594 through 600 would be open. The bus 579 hard-wire OR's the analogous switches in the plurality of receiver control circuits in any particular enclosure together. Therefore, when a signal is produced by retriggerable one shot 572 in the circuit shown, it is transmitted in its companion receiver control circuits within the same enclosure across switch 592 and a signal is produced at the input of OR gate 628. The use of switches 592 through 600 prevent receiver section 74 from causing receiver control circuit 75 to turn off the output of its own receiver.

Whenever a signal is produced by a retriggerable one shot such as retriggerable one shot 572 by any of the plurality of communications circuits 71 within a particular enclosure, the signal or signals are communicated across the bus 579 to the input of OR gate 630. The output of OR gate 630 is a communications line such as line 520. In the preferred embodiment, when a plurality of communications circuits 71 are contained in a single enclosure, not all communications circuits will be connected to a line such as line 520. By reason of the use of bus 579 and OR gate 630, each of the plurality of communications circuits contained within an enclosure such as primary enclosure 502 would provide identical output for use on a line such as line 520. Insofar as the particular OR gate 630 is not used in a particular configuration, it could be omitted in practice. At least one communications circuit 71 in any particular enlosure should be provided with an OR gate 630 and its associated inputs.

Receiver control circuit 75 is also provided with an input from a communications line such as line 524. A signal on a line such as line 524 indicates that a receiver physically located in some other enclosure is receiving data. A plurality of lines such as line 524 or line 534 are connected to an OR gate 632. Pull-up resistors such as resistors 634 and 636 in accordance with prior art are shown. Capacitors 638 and 640 induce a slight time delay in the received signal. OR gate 632 may be, for example, a SN74LS11N available from Texas Instruments. The output of OR gate 632 is buffered through integrated circuit 642 which may be an SN57417N from Texas Instruments and is then connected through the bus 579 to the inputs of both OR gate 628 and OR gate 630. If a true state is produced at the output of OR gate 632, it is transmitted to other enclosures through OR gate 630. The outputs of all receiver sections within the enclosure containing receiver control circuit 75 are interrupted by reason of a true state at the output of a plurality of OR gates such as OR gate 628 contained in each of a plurality of receiver control circuits 75 in a particular enclosure.

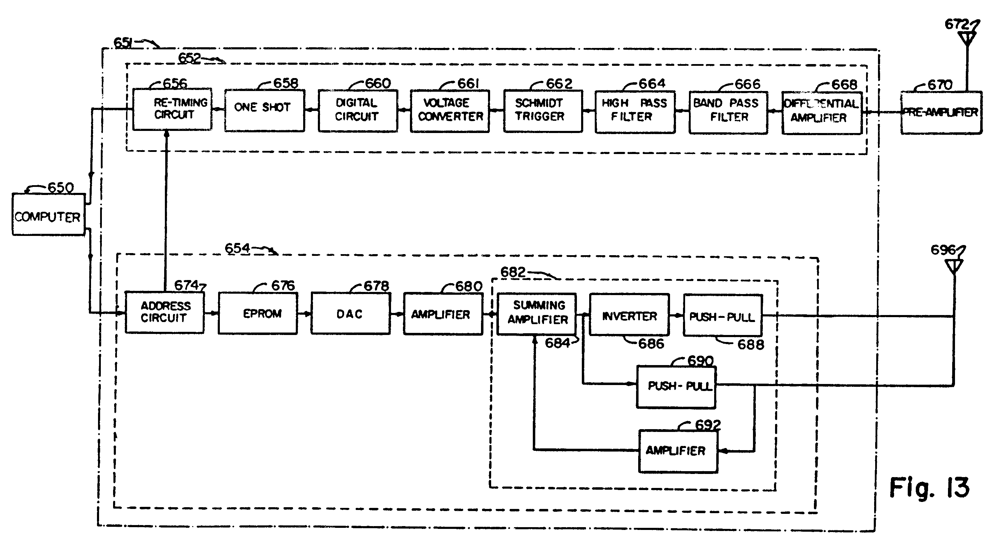

Each vehicle 58 is provided with a vehicle communications circuit substantially identical in function to the receiver section 74 and the transmitter section 76 of the communications circuit 71. The operation of the vehicle communications circuit 651 is explained in connection with Figure 13. Differences between the communications circuit 71 and the vehicle communication circuit 651 will be pointed out.

Because only one vehicle communications circuit 651 is provided on any particular vehicle 58 in the preferred embodiment, no receiver control section analogous to receiver control section 75 in the communications circuit 71 is provided. Moreover, no circuit analogous to the line driver section 72 is required by the vehicle. In the preferred embodiment, the vehicle receiver section 652 is provided with an antenna 672 and the vehicle transmitter section 654 is provided with a separate antenna 696. For this reason, therefore, a junction such as junction 78 in the communications circuit 71 is not provided. The output of the vehicle receiver section 652 is interrupted from communication with the vehicle computer 650 whenever the vehicle transmitter section 652 is transmitting.

Having described certain differences between the vehicle communications circuit 651 and the communications circuit 71, a more detailed description of the vehicle communications circuit 651 will be set forth below. Reference is made to the description of circuits and circuit components set forth in connection with the description of the communications circuit 71. In accordance with prior art, the values for the capacitors and resistors contained in vehicle communications circuit 651 are generally different from those in communications circuit 71 in order to tune the vehicle communications circuit 651 for optimum performance. Different values are required for the various resistors and capacitors, as taught by prior art, because the communications circuit 71 is associated with a particular guide wire 80 which has a peculiar configuration dependent upon the disposition of the guide wire. Since guide wire 80 serves as an antenna for the communications circuit 71, its characteristics as an antenna are clearly altered by the particular layout chosen. In the vehicle communications circuit 651, on the other hand, the vehicle receiver section 652 and the vehicle transmitter section 654 have separate antennas 672 and 696 associated with each section. The characteristics of these antennas 672 and 669 are different from each other and from the guide wire 80. As taught by prior art, the values of resistors, capacitors and inductors in the disclosed circuits should be chosen to optimize performance, particularly with respect to the varying antenna characteristics pointed out above.

Each vehicle 58 is provided with a vehicle computer 650 such as a Intel 88/25, which is connected to a vehicle communications circuit 651. When data is transmitted from a guide wire such as guide wire 52 to a vehicle 58, it is detected by an antenna 672 which is provided with a plurality of preamplifier stages 670 in accordance with prior art. An appropriate amplifier 110 is disclosed in connection with the receiver section 74. The signal from the preamplifier 670 is carried to a vehicle receiver section 652 which comprises a vehicle differential amplifier 668, a vehicle band pass filter 666, a vehicle high pass filter 664, a vehicle Schmidt trigger 662, a vehicle voltage converter 661, a vehicle digital circuit 660, a vehicle one shot circuit 658 and a vehicle re-timing circuit 656. The output of the vehicle receiver section 652 is communicated to the vehicle computer 650. In accordance with prior art, a communications port such as a standard RS 422 port may be provided between the vehicle receiver section 652 and the vehicle computer 650. Operation of the vehicle differential amplifier 668 is disclosed in connection with the differential amplifier 104 above. Similarly, the vehicle band pass filter 666, the vehicle high pass filter 664, the vehicle Schmidt trigger 662, the vehicle voltage converter 661, the vehicle digital circuit 660, the vehicle one shot 658 and the vehicle retiming circuit 656 are disclosed above in connection with the band pass filter 106, the high pass filter 108, the Schmidt trigger 112, the voltage converter 114, the digital circuit 116, the one shot 118 and the retiming circuit 120 of the receiver section 74, respectively. It will be noted that the receiver section 74 contains an amplifier 110 which is not included in the preferred embodiment of the vehicle receiver section 652. Although an amplification stage could be provided within the frame work of the invention, in the preferred embodiment the preamplifier 670 has been found to provide sufficient amplification for purposes of the vehicle receiver section 652.

When data is transmitted from a vehicle 58 to the vehicle traffic control computer 70, such data is generated at the vehicle computer 650. It is then communicated to a vehicle transmitter section 654. In accordance with prior art, a suitable communications port such as an RS422 port may be provided between the vehicle computer 650 and the vehicle transmitter section 654. The circuitry and operation of the vehicle transmitter section 654 is disclosed with reference to the transmitter section 76 described above. The vehicle transmitter section 654 comprises a vehicle address circuit 674, a vehicle erasable programable read only memory 676 (EPROM), a vehicle digital-to-analog converter 678 (DAC), a current to voltage converter 680 and a vehicle push-pull amplifer 682. The vehicle push-pull amplifier 682 comprises a vehicle summing amplifier 684, two vehicle push-pull circuits 688 and 690, one of which is provided with a vehicle inverter 686, and a vehicle feed back amplifier 692 which is connected between the output of one vehicle push-pull circuit such as 690 and the vehicle summing amplifier 684. The circuitry and operation of the vehicle address circuit 674, the vehicle EPROM 676, the vehicle DAC 678, the vehicle amplifier 680 and the vehicle push-pull amplifier 682 are disclosed above in connection with the address circuit 82, the EPROM 84, the DAC 86, the amplifier 88, and the push-pull amplifier 90 in connection with the transmitter section 76 above.

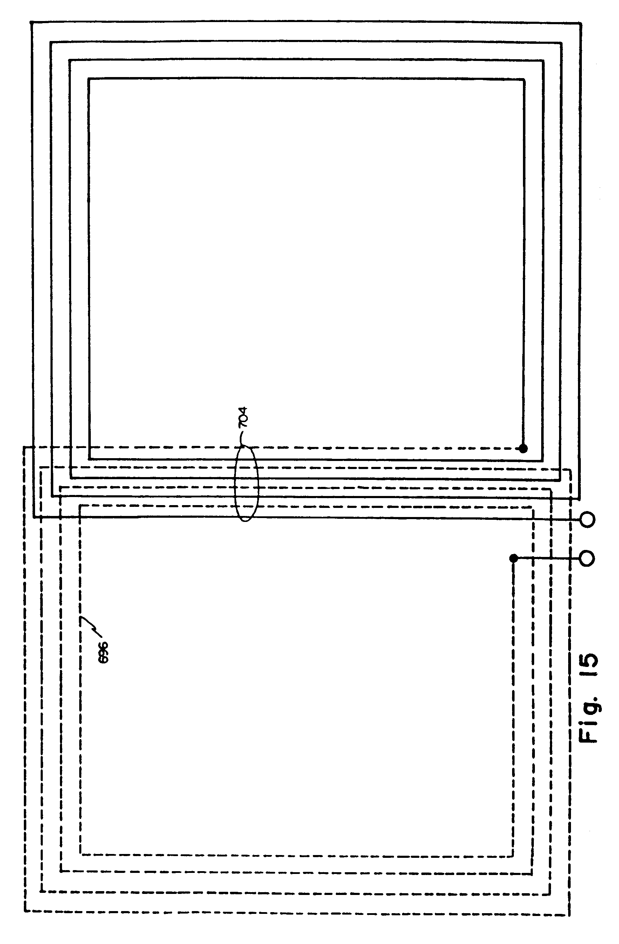

The output of the vehicle transmitter section 654 is connected to a transmit antenna 696 which will be more particularly described below. The address vehicle circuit 674 of the vehicle transmitter section 654 contains a retriggerable one shot 698 which is shown in block diagram form in Figure 14. The functioning of retriggerable one shot 698 corresponds to the function of retriggerable one shot 170 in the transmitter section 76. As described above in connection with the receiver control section 75, retriggerable one shot 698 is connected to a one shot 700 and an output register 702 contained in the vehicle retiming circuit 656. The operation of retriggerable one shot 698, one shot 700, and output register 702 correspond to the functions of the retriggerable one shot 170, one shot 366 and output register 372 described above in connection with the communications circuit 71. The purpose of this connection is to interrupt the output of the vehicle receiver section 652 whenever the vehicle transmitter section 654 is operational.

The vehicle transmitter section 654 is provided with a low frequency, high gain transmit antenna 696. The transmit antenna 696 is depicted in Figure 15 and is comprised of a substantially figure 8 pattern of conductors. In the preferred embodiment, the transmitter antenna 696 is disposed generally along the bottom of a vehicle 58 in such a manner that the central bar 704 of the transmit antenna 696 is positioned substantially parallel to the guide wire 52 which is embedded in the floor beneath the vehicle 58. The conductor in the transmit antenna 696 is wound in the disclosed figure 8 pattern in such a manner that all currents in the sections of the conductor lying along the central bar 704 will flow in the same direction. In the preferred embodiment, the transmit antenna 696 is comprised of 20 turns of conductor disposed 10 turns on the upper half of figure 8 and ten turns of the lower half of the figure 8. The transmit antenna is constructed to obtain the maximum possible length for the central cross bar 704. If the vehicle 58 is segmented, or in any other manner prevents a single antenna from being deployed substantially the entire length of the vehicle 58, a plurality of transmit antennas 696 may be deployed along the length of the vehicle.

In the preferred embodiment, the transmit antenna 696 is constructed by applying conducting material to a non-conducting material such as printed circuit board material using methods common in the art for the construction of printed circuit boards.

In order to implement the guide wire communications system, the vehicle traffic control computer 70 is provided with programming which permits it to compose a message. Messages contain coded directions for the operation of the vehicle. Messages can be sent by the vehicle traffic control computer 70 either globally, that is to all vehicles currently in communication with the vehicle traffic control computer 70, or a message can be addressed to a specific vehicle. All messages from the vehicle traffic control computer 70 are carried on all guide wires in the system which has a star architecture implementation of which is described above. The guide wire communications system uses a multidrop method of communiation. That is, a plurality of vehicles, may be on any guide wire at any time. All messages from the vehicle traffic computer 70 ignores all messages except those designated global or those addressed to the specific vehicle 58. Messages have two formats: command messages which provide directions to the vehicle 58 for tasks to be performed, and polling messages which request the current status of a vehicle. A vehicle 58 transmits data to the vehicle traffic control computer 70 only after it has been first individually addressed by the vehicle traffic control computer 70. Thus, in the system the vehicle traffic control computer 70 is a master and the vehicles 58 are slaves. The fact that vehicles transmit messages only in response to a message from the vehicle traffic control computer 70 prevents communications collisions in the data which would occur if a plurality of vehicles attempted to communicate with the vehicle traffic control computer 70 simultaneously. When an individual vehicle 58 receives a polling message or a command message from the vehicle traffic control computer 70, it is permitted by its vehicle computer 650 to attempt to transmit a precomposed coded message to the vehicle traffic control computer 70 acknowleging the receipt of the message and reporting the vehicle status. Messages are sequentially ordered. The vehicle computer 650 checks the message sequence. If a message is received which has the same sequence number as the previous message, the second message will be discarded. If a message is received out of sequence, an error condition results. The vehicles are stopped and operator intervention is required. If the vehicle traffic control computer 70 does not receive an acknowledgment of receipt of its message by a vehicle 58, it will re-transmit the message.

The vehicle computer 650 is further provided with memory for queuing a plurality of messages from the vehicle traffic control computer 70. Based on predetermined parameters which are determined with reference to a specific embodiment of the invention, the vehicle computer 650 reports the estimated time required for the vehicle 58 to execute the active task assigned to the vehicle 58 by the the vehicle traffic control computer 70 as contained in the memory queue. The memory queue is organized on a first in, first out basis. The estimated completion time of the current task at the top of the queue is transmitted from the vehicle 58 to the vehicle traffic control computer 70 whenever the vehicle 58 acknowledges receipt of a message and reports its status. Based on the reported estimated time of completion, the vehicle traffic control computer 70 will generally not request a status report from a particular vehicle 58 until the estimated completion time of the vehicle has elapsed. At longer intervals, all vehicles in the system are also polled serially in accordance with prior art. This assures that all vehicles in the system are polled from time to time.

The plurality of guide wires comprising the system are divided into various zones by bench marks which may consist, for example, of magnets embedded in the floor which are detected by means of sensors carried on each vehicle in accordance with the prior art into various zones. These zones are designated in the present invention as resources. The vehicle traffic control computer 70 is provided with tables which associate resources with possible tasks which can be assigned to a vehicle 58. When the vehicle traffic control computer 70 transmits a message to a vehicle 58 in which the vehicle is assigned a task, the vehicle traffic control computer 70 also allocates to that vehicle 58 various codes representing the resources necessary for the completion of such task. The codes representing resources are uniquely assigned to a particular vehicle until that vehicle reports that its task is completed and reallocates the particular resource to the vehicle traffic control computer 70. Use of resource allocation permits a plurality of tasks to be assigned to a particular vehicle without overlapping tasks between two or more vehicles.

## Claims

1. A system which provides two-way communication for controlling a plurality of unmanned task-performing vehicles, said system comprising:
a computer control centre comprising vehicle traffic control means (70);
a plurality of unmanned task-performing vehicles (58) remote from the computer control centre, each vehicle comprising a first transmitter means and a first receiver means;
guide wire means (48-56,80) defining a plurality of paths which are selectively traversed by the vehicles, the guide wire means comprising means for transmitting control data to each vehicle and status information to the computer control centre;
said system being characterised in that it comprises:
a plurality of communication circuits connected to said guide wire means and each comprising a second transmitter means (76), a receiver control means (75) and a second receiver means (74);
said second transmitter means (76) comprising means (508) which receive digital data from said vehicle traffic control means (70), a memory (84) storing respective sets of digital information corresponding to different digital bit values, each set of digital information representing an analogue waveform of a respective selected frequency, means (82) which address the memory in response to the digital data received from said vehicle traffic control means (70), means responsive to said means (82) which address the memory, outputting a sequence of said sets of digital information corresponding to the sequence of bits in the digital data received from said vehicle traffic control means, means (86) converting said sequence of sets of digital information into the corresponding sequence of analogue waveforms of different frequencies and means (90) outputting the sequence of analogue waveforms to the guide wire means (48-56, 80) and along the guide wire means for pickup by the vehicle receiver means;
the receiver control means (75) of each communication circuit disabling said second receiver means (74) of that communication circuit, and hence preventing transmission of any message to the computer control centre from any vehicle on a guide wire means connected to that communication circuit, when the vehicle traffic control means are transmitting a task-related message to a specified vehicle.

2. The system according to claim 1 wherein the computer control center transmitter means transmits each message intended for a single vehicle globally to all vehicles and wherein each vehicle comprises means causing the disablement action of a said receiver control means (75) in all other vehicles to ignore said global message except for said single vehicle.

3. The system according to claim 2 wherein each vehicle comprises a said second receiver means (74) which when disabled by the receiver control means (75) inhibits the associated vehicle transmitter means except when vehicle transmission is responsive to computer control center polling of said specific vehicle.

4. The system according to claim 3 wherein the computer control center comprises means which cause vehicles to be polled sequentially whereby the vehicles so polled are caused to respond sequentially.

5. The system according to claim 1 wherein the computer control center comprises time estimating means to estimate the length of time needed by the specific vehicle to perform each assigned task and further comprising means which poll the status of the specific vehicle at the end of said estimated length of time.

6. The system according to claim 1 further comprising means which electronically define length segments of the guide wire means and which electronically identify and exclusively reserve to the specific vehicle all guide wire length segments needed to complete an assigned task until the assigned task is completed.

7. The system according to claim 1 wherein said computer control center further comprises means which normally inhibit transmission of duplicate computer control center messages and means which cause a duplicate computer control center message to be transmitted only when the original message is not acknowledged by the vehicle for which it was intended.

8. The system according to claim 1 wherein:
each said control receiver is paired with an associated receiver control means in electrical communication therewith:
each receiver control means is in electrical communication with all other receiver control means;
the guide wire means receive each output message from each vehicle transmitter of each vehicle traversing the guide wire means and communicating said message to one of the control receivers and receiving each control output message from the control transmitter means and communicating said received output message from the control transmitter means to one predetermined vehicle;
the vehicle traffic control means are in electrical communication with each control receiver whereby a message received by any control receiver is communicated to the vehicle traffic control means;
each receiver control means comprises means issuing a signal selectively disabling the associated receiver upon the receipt of a signal from another receiver control means by which the system is temporarily preempted for transmission of a single message between the vehicle traffic control means and one vehicle;
thereby avoiding mixing of message with resulting errors whereby the system accommodates infinite expansion in terms of the number of vehicles and guide wires.

9. The system according to Claim 1 wherein:
the traffic control means further comprise means which electronically identify guide wire length segments means which electronically identify each transportation task to be performed by any vehicle, means which correlate the transportation task and guide wire length segments needed for carrying out each transportation task, means for reserving the guide wire length segments required for completion of a specific transportation task assigned to one of said vehicles, means causing the traffic control transmitter means to communicate the specific task to the vehicle receiver of said one vehicle and to allocate the reserved guide wire length segments to said one vehicle whereupon the traffic control means cause the one vehicle to perform the specific task using the reserved guide wire length segments, means preventing the specific task and reserved guide wire length segments from being performed and made available, respectively, to a second vehicle during the performance of the specific task and utilization of the reserved guide wire length segments by the said one vehicle, whereby, by exclusive temporary allocation of guide wire length segments, whereby the travel paths and tasks performed by the vehicles are striclty controlled and conflict between vehicles is avoided.

10. The system according to claim 9 wherein the traffic control means further comprise control receiver means and wherein each vehicle further comprises vehicle transmitter means in communication with the control receiver means and wherein the vehicle transmitter means comprise means which (a) selectively signal the traffic control means through the control receiver means when a specific task assigned to the vehicle with which the transmitter means is associated has been completed and (b) release to the traffic control means at least substantially all of the reserved guide wire length segments for reallocation by the traffic control means.

11. The system according to claim 10 wherein the signal and release means release all of the reserved guide wire length segments except for the length segment of the guide wire means physically occupied by the vehicle at the time of the release.

12. The system according to Claim 1 wherein:
the vehicle traffic control means further comprise;
means by which a given task and path enablements for performing said task are exclusively delegated to a single vehicle of the system, said path enablements comprising reservation of specific length segments of the path defined by said guide wire means to the single vehicle;
means by which predetermined time to perform said task is set and means causing the single vehicle to be polled by the traffic control means at a point in time corresponding essentially to the predetermined time set.

13. The system according to claim 12 wherein the time setting means are in electrical communication, via the guide wire means, with the vehicle traffic control means but are vehicle-carried.

14. The system according to Claim 1 wherein:
the control transmitter means and vehicle transmitter means and the control receiver means and vehicle receiver means, respectively, comprise:
substantially the same electrical means, each of the electrical means transmits and receives substantially the same communicating data signals, comprising signal generating means and antenna means for transmitting generated signal from the vehicle to the guide wire, and vice versa;
the antenna means in the vehicle portion comprising at least two opposed conductive loops, each conductive loop comprising a plurality of turns.

15. The system according to claim 14 wherein the loops of the antenna means collectively comprise an essentially symmetrical figure 8 configuration which is essentially symmetrically located along the center line of the vehicle and wound to steer all current flow unidirectionally along a central bar of the figure 8 configuration.

16. The system according to any of claims 1-15 wherein the respective frequencies are in the order of 9,600 Hz and 19,200 Hz with data transmission rates up to 9,600 BAUD.

17. The system according to claim 14 or 15 wherein each conductive loop comprises a printed circuit deposited on a printed circuit board.

18. The system according to clalm 14 or 15 wherein the antenna means comprises at least two sets of two such opposed conductive loops, one set of the opposed conductive loops being carried by the vehicle at one location so as to be essentially symmetrically disposed in respect to the center line of the vehicle, and the second set of the conductive loops being carried by the vehicle at another location so as to be also essentially symmetrically disposed in respect to the center line of the vehicle.

19. The system according to any preceding claim wherein each analog waveform comprises one or more full cosine waveform cycles whereby the distinct nature of each waveform cycle is preserved

20. The system according to claim 19 wherein the vehicle receiver means comprises means for transforming the cosine waveform cycles received from the guide wire means to one or more full sine waveform cycles whereby decoding errors are less likely.

21. The system according to claim 20 further comprising:
means for producing the waveforms to have at least two different and distinguishable frequencies which produce digital data representing at least two logical states such that the transmission rate can be the same as the lowest frequency used.

22. The system according to claim 20 wherein the sets of information stored in the memory each represent a distortion of respective sinusoidal waveforms and wherein inductance characteristics of the guide wire means are such that each distorted sinusoidal waveform cycle outputted to and communicated along the guide wire means is altered by said inductance characteristics into an exact sinusoidal waveform cycle and the transition between any two such exact sinusoidal waveform cycles is essentially instantaneous and any signal distortion at said transition is essentially avoided.

23. The system according to Claim 14 further comprising:
a communication subsystem which comprises a non-vehicle portion comprising the control transmitter means and control receiver means and a vehicle portion comprising the vehicle transmitter means and vehicle receiver means each portion comprising substantially the same electrical means, each of the electrical means transmits and receives substantially the same communicating data signals having low frequency and low power;
each vehicle of said plurality of unmanned, tasks performing vehicles comprising signal detecting and tracking means; at least two sources of signals;
means for outputting the signals from each source to and along the guide wire loop;
the guide wire loop having having characteristics such that said outputted signals are detected by the vehicle signal detecting and tracking means used to cause the vehicle to substantially follow the path defined by the guide wire loop;
means for reducing the impedance of the guide wire loop whereby amplitude deterioration in the signals on the guide wire loop, which would otherwise occur, is alleviated.

24. The system according to claim 23 wherein the impedance reducing means comprises opposed inductor means respectively in electrical communication with the guide wire loop and capacitor means interposed between the opposed inductor means.

25. The system according to claim 23 further comprising a receiver, a resistor means in electrical communication with the receiver and the guide wire loop for increasing the impedance of and decreasing the current flow in the guide wire loop to accommodate improved reception at the receiver whereby the resistor means accommodates accurate detection of the low power signal.

26. The communication sytem according to claim 22 wherein the receiver means comprises means for transforming full cosine waveforms received from the guide wire means to one or more fully sine waveforms.

27. The system according to claim 22 wherein the sets of information stored in the memory each represent a distortion of a distinct sinusoidal waveform cycle and wherein inductance characteristics of the guide wire means are such that each distorted sinusoidal waveform cycle outputted to and communicated along the guide wire means is altered by said inductance characteristics into an exact sinusoidal waveform cycle and the transition between any two such exact sinusoidal waveform cycles is essentially instantaneous and any signal distortion at said transition is essentially avoided.

28. The system according to claim 1
wherein at least one receiver means comprises two receivers, one at the control site, and the other on the vehicle;
wherein the at least one vehicle transmitter means or control transmitter means comprises two transmitters, one at the control site, and the other on the vehicle for two-way transmission; and said system further comprising means interposed between the receiver and the transmitter at the control site and at the vehicle for disabling the associated receiver when the associated transmitter is transmitting.

## Patentansprüche

1. Eine bi-direktionale Kommunikation ermöglichendes System zur Steuerung einer Anzahl führerloser,Aufträge abwickelnder Fahrzeuge, wobei das System aufweist:
ein Computer-Steuerzentrum, das Mittel (70) zur Steuerung des Fahrzeugverkehrs enthält;
eine Anzahl von Aufträge ausführenden unbemannten Fahrzeugen (58), die sich entfernt von dem Computer-Steuerzentrum befinden und von denen jedes eine erste Sendeeinrichtung sowie eine erste Empfängereinrichtung enthält;
Leitdrahteinrichtungen (48-56, 80), die eine Anzahl von Wegen definieren, die von den Fahrzeugen wahlweise befahren werden, wobei die Leitdrahteinrichtungen Mittel zum Übertragen von Steuerdaten zu jedem Fahrzeug und von Statusinformationen zu dem Computer-Steuerzentrum umfassen;
dadurch gekennzeichnet, daß das System enthält:
eine Anzahl von Kommunikationseinrichtungen, die mit den Leitdrahtmitteln verbunden sind und von denen jede eine zweite Sendereinrichtung (76), eine Empfängersteuereinrichtung (75) und eine zweite Empfängereinrichtung (74) enthält;
wobei die zweite Sendereinrichtung (76) enthält: Mittel (508), die digitale Daten von den Mitteln (70) zur Steuerung des Fahrzeugverkehrs empfangen, einen Speicher (84) zum Speichern entsprechender digitaler Informationssätze mit entsprechenden unterschiedlichen digitalen Bitwerten, von denen jeder digitaler Informationssatz einen Analogschwingungszug einer entsprechenden ausgewählten Frequenz repräsentiert, Mittel (82), die den Speicher in Abhängigkeit von digitalen Daten adressieren, die von den Mitteln (70) zur Steuerung des Fahrzeugverkehrs empfangen wurden, Mittel, die in Abhängigkeit von den Mitteln (82) zum Adressieren des Speichers arbeiten und eine Sequenz dieser digitalen Informationssätze ausgeben, die der Bitsequenz in den digitalen Daten entsprechen, die von den Mitteln zur Steuerung des Fahrzeugverkehrs empfangen wurden, Mittel (86) zum Konvertieren der Sequenz der digitalen Informationssätze in die entsprechende Sequenz von analogen Schwingungszügen mit unterschiedlichen Frequenzen,und Mittel (90) zum Ausgeben der Sequenz der analogen Schwingungszüge an die Leitdrahteinrichtung (48-56, 80) und zur Aufnahme durch die Empfängereinrichtung des Fahrzeugs längs der Leitdrahteinrichtungen;
wobei die Empfängersteuereinrichtung (75) jeder Kommunikationseinrichtung die zweite Empfängereinrichtung (74) der betreffenden Kommunikationseinrichtung sperrt und folglich die Übertragung jeglicher Nachricht von den mit der Kommunikationseinrichtung verbundenen Fahrzeugen auf einer Leitdrahteinrichtung zu dem Computer-Kontrollzentrum, wenn die Mittel zur Steuerung des Fahrzeugverkehrs eine auftragsbezogene Nachricht an ein spezielles Fahrzeug übermitteln.

2. System nach Anspruch 1, bei dem die Sendeeinrichtung des Computer-Steuerzentrums jede für ein einzelnes Fahrzeug vorgesehene Nachricht global an alle Fahrzeuge übermittelt und bei dem jedes Fahrzeug Mittel aufweist, die eine Sperraktion der Empfängersteuereinrichtung (75) aller anderen Fahrzeuge bewirkt, damit die globale Nachricht, abgesehen von diesem einzigen Fahrzeug, im übrigen ignoriert wird.

3. System nach Anspruch 2, bei dem jedes Fahrzeug eine zweite Empfängereinrichtung (74) enthält, die, wenn sie durch die Empfängersteuereinrichtung (75) gesperrt ist, die zugehörige Fahrzeugsendeeinrichtung sperrt, es sei denn, die Übermittlung seitens des Fahrzeugs erfolgt infolge eines Aufrufs dieses speziellen Fahrzeugs durch das Computer-Steuerzentrum.

4. System nach Anspruch 3, bei dem das Computer-Steuerzentrum Mittel aufweist, um die Fahrzeuge nacheinander aufzurufen, damit die so aufgerufenen Fahrzeuge veranlaßt werden, sequentiell zu antworten.

5. System nach Anspruch 1, bei dem das Computer-Steuerzentrum Mittel zum Abschätzen der Zeit enthalten, um die Länge der Zeit abzuschätzen, die von dem speziellen Fahrzeug benötigt werden, um den jeweils zugewiesenen Auftrag aufzuführen, und bei dem ferner Mittel enthalten sind, die den Status des speziellen Fahrzeugs am Ende der abgeschätzten Zeitspanne abfragen.

6. System nach Anspruch 1, das ferner Mittel aufweist, die auf elektronische Weise Längenabschnitte bei den Leitdrahteinrichtungen definieren und die auf elektronische Weise alle Längenabschnitte des Leitdrahtes, die zur vollständigen Ausführung der zugewiesenen Aufgabe erforderlich sind, identifizieren und exklusiv für das spezielle Fahrzeug reservieren, bis der zugewiesene Auftrag ausgeführt ist.

7. System nach Anspruch 1, bei dem das Computer-Steuerzentrum außerdem Mittel enthält, die normalerweise die Übermittlung von Duplikaten von Nachrichten des Computer-Kontrollzentrums sperren,und Mittel aufweist, die bewirken, daß ein Duplikat einer Nachricht des Computer-Steuerzentrums nur dann übertragen wird, wenn die Originalnachricht nicht von dem Fahrzeug quittiert wurde, für die sie vorgesehen war.

8. System nach Anspruch 1, bei dem:
jeder Steuerempfänger mit einer zugehörigen Empfängersteuereinrichtung durch elektrische Kommunikation gepaart ist;
jede Empfängersteuereinrichtung mit allen anderen Empfängersteuereinrichtungen elektrisch kommuniziert;
die Leitdrahteinrichtungen jede Nachricht, die von den Fahrzeugsendern aller die Leitdrahteinrichtung befahrenden Fahrzeuge abgegeben wird, empfängt, und die Nachricht an einen der Steuerempfänger weiterleitet, sowie jede Steuernachricht, die von den Sendersteuereinrichtungen abgegeben werden, empfängt, und die empfangenen, von den Sendersteuereinrichtungen empfangenen Signale an ein vorbestimmtes Fahrzeug weiterleiten;
die Mittel zur Steuerung des Fahrzeugverkehrs elektrisch mit jedem Steuerempfänger kommunizieren, um eine von einem Steuerempfänger empfangene Nachricht an die Mittel zur Steuerung des Fahrzeugverkehrs weiterzuleiten;
jede Empfängersteuereinrichtung Mittel aufweist, die ein Signal abgeben, um wahlweise den zugehörigen Empfänger beim Empfang eines Signals von einer anderen Empfängersteuereinrichtung zu sperren, wodurch das System vorübergehend zur Übermittlung einer einzelnen Nachricht zwischen den Mitteln zur Steuerung des Fahrzeugsverkehrs und einem Fahrzeug belegt wird;
um dadurch eine Mischung von Nachrichten zu vermeiden, die zu Fehlern führen würde, wodurch das System eine unbegrenzte Ausweitung hinsichtlich der Anzahl der Fahrzeuge und der Leitdrähte ermöglicht.

9. System nach Anspruch 1, bei dem
die Mittel zur Steuerung des Fahrzeugverkehrs ferner enthalten: Mittel, die elektronisch den Längenabschnitt der Leitdrahteinrichtung identifizieren sowie elektronisch jeden durch ein Fahrzeug abzuwickelnden Transportauftrag identifizieren; Mittel, die den Transportauftrag und das zur Ausführung jedes Transportauftrages erforderlichen Längensegment der Leitdrahteinrichtung korrelieren, Mittel, um die Längenabschnitte der Leitdrahteinrichtung zu reservieren, die zur Ausführung eines spezifischen, einem der Fahrzeuge zugewiesenen Transportauftrags erforderlich sind; Mittel, die die Sendeeinrichtung der Mittel zur Steuerung des Fahrzeugverkehrs veranlassen, den speziellen Auftrag zu dem Fahrzeugemfänger dieses Fahrzeuges zu übermitteln und die Längenabschnitte der Leitdrahteinrichtung diesem einen Fahrzeug zuzuordnen, woraufhin die Einrichtungen zur Steuerung des Fahrzeugverkehrs veranlaßt, daß dieses eine Fahrzeug den spezifischen Auftrag unter Verwendung der reservierten Längenabschnitte der Leitdrahteinrichtung ausführt; Mittel, um zu verhindern, daß
der spezielle Auftrag und die reservierten Längenabschnitte der Leitdrahteinrichtung von einem zweiten Fahrzeug ausgeführt wird bzw. benutzt werden, während die Ausführung des speziellen Auftrags läuft und die Benutzung der reservierten Längenabschnitte der Leitdrahteinrichtung durch dieses eine Fahrzeug anhält, wodurch infolge temporärer ausschließlicher Zuordnung der Längenabschnitte der Leitdrahteinrichtung die Fahrwege und die von den Fahrzeugen ausgeführten Aufträge streng kontrolliert und Konflikte zwischen den Fahrzeugen vermieden werden.

10. System nach Anspruch 9, bei dem die Mittel zur Steuerung des Fahrzeugverkehrs ferner eine Steuerempfängereinrichtung enthalten und bei dem jedes Fahrzeug außerdem eine Fahrezeugsendeeinrichtung aufweist, die mit der Steuerempfängereinrichtung kommuniziert, und bei dem die Fahrzeugsendeeinrichtung Mittel umfaßt, die (a) selektiv den Mitteln zur Steuerung des Fahrzeugverkehrs über die Steuerempfängereinrichtung signalisieren, wenn ein spezieller Auftrag ausgeführt ist, der dem Fahrzeug zugewiesen wurde, zu dem die Sendeeinrichtung gehört,und die (b) an die Einrichtung zur Steuerung des Fahrzeugverkehrs am Ende im wesentlichen alle reservierten Längenabschnitte der Leitdrahteinrichtung freigeben, damit die Einrichtung zur Steuerung des Fahrzeugverkehrs diese erneut zuweisen kann.

11. System nach Anspruch 10, bei dem die Signalisierungs- und Freigabemittel alle reservierten Längenabschnitte der Leitdrahteinrichtung mit Ausnahme des Längenabschnittes der Leitdrahteinrichtung freigeben, der zum Zeitpunkt der Freigabe durch das Fahrzeug physisch belegt ist.

12. System nach Anspruch 1, bei dem
die Einrichtung zur Steuerung des Fahrzeugverkehrs außerdem umfaßt:
Mittel, durch die ein gegebener Auftrag und Wegefreigaben zur Ausführung dieses Auftrags exklusiv an ein einziges Fahrzeug des Systems delegiert werden, wobei die Wegefreigaben die Reservierung spezieller Längenabschnitte des durch die Leitdrahteinrichtung definierten Weges für das einzige Fahrzeug umfassen;
Mittel, durch die eine vorbestimmte Zeit zur Ausführung des Auftrags eingestellt wird, sowie Mittel, durch die das einzige Fahrzeug durch die Einrichtung zur Steuerung des Fahrzeugverkehrs zu dem Zeitpunkt aufgerufen wird, der im wesentlichen der vorbestimmten Zeiteinstellung entspricht.

13. System nach Anspruch 12, bei dem die Zeiteinstellmittel über die Leitdrahteinrichtungen mit der Steuereinrichtung für den Fahrzeugverkehr elektrisch kommunizieren, jedoch fahrzeuggetragen sind.

14. System nach Anspruch 1, bei dem
die Sendersteuereinrichtungen, die Fahrzeugsendeeinrichtungen, die Empfängersteuereinrichtungen bzw. die Fahrzeugempfängereinrichtungen
im wesentlichen die gleichen elektrischen Einrichtungen, wobei jede der elektrischen Einrichtungen im wesentlichen dieselben Kommunikationsdatensignale sendet und empfängt, einschließlich Signalerzeugungseinrichtungen und Antenneneinrichtungen aufweisen, um das erzeugte Signal von dem Fahrzeug zu dem Leitdraht und umgekehrt zu übertragen;
die Antenneneinrichtung auf dem Fahrzeugteil wenigstens zwei gegenüberstehende Leiterschleifen enthalten, von denen jede Leiterschleife eine Vielzahl von Windungen enthält.

15. System nach Anspruch 14, bei dem die Schleifen der Antenneneinrichtungen zusammen im wesentlichen die Konfiguration einer symmetrischen Acht aufweisen, die im wesentlichen symmetrisch längs der Mittellinie des Fahrzeugs angeordnet ist und derart gewickelt ist, damit der gesamte Stromfluß in einer einzigen Richtung längs eines zentralen Balkens der Acht-Konfiguration gerichtet wird.

16. System nach einem der Ansprüche 1 bis 15, bei dem die entsprechenden Frequenzen in der Größenordnung zwischen 9600 Hz und 19200 Hz liegen, wobei die Datenübertragungsrate bis zu 9600 Baud beträgt.

17. System nach Anspruch 14 oder 15, bei dem jede Leiterschleife eine gedruckte Schaltung umfaßt, die auf einer gedruckten Leiterplatte angeordnet ist.

18. System nach Anspruch 14 oder 15, bei dem die Antenneneinrichtung wenigstens zwei Sätze von zwei derart einander gegenüberstehenden Leiterschleifen umfaßt, daß ein Satz der gegenüberstehenden Leiterschleifen, der von dem Fahrzeug an einer stelle getragen ist, im wesentlichen symmetrisch bezüglich der Mittellinie des Fahrzeugs angeordnet ist und daß der andere Satz der Leiterschleifen, der von dem Fahrzeug an einer anderen Stelle getragen wird, ebenfalls im wesentlichen symmetrisch bezüglich der Mittellinie des Fahrzeugs angeordnet ist.

19. System nach einem der vorhergehenden Ansprüche, bei dem jeder analoge Schwingungszug eine oder mehrere vollständige Kosinusschwingungen enthält, wodurch die spezielle Natur jeder Schwingung des Schwingungszugs erhalten bleibt.

20. System nach Anspruch 19, bei dem die Fahrzeugempfängereinrichtung Mittel enthält, um die Kosinusschwingungszüge, die von den Leitdrahteinrichtungen empfangen werden, in eine oder mehrere Sinusvollschwingungen umzuwandeln, damit Decodierfehler weniger wahrscheinlich werden.

21. System nach Anspruch 20, das ferner enthält:
Mittel zum Erzeugen der Schwingungszüge, um wenigstens zwei unterschiedliche und voneinander zu unterscheidende Frequenzen zu haben, die Digitaldaten produzieren, die wenigstens einem von zwei logischen Zuständen entsprechen, derart, daß die Übermittlungsgeschwindigkeit gleich der niedrigsten verwendeten Frequenz sein kann.

22. System nach Anspruch 20, bei dem die in dem Speicher gespeicherten Informationssätze jeweils eine Abweichung von den entsprechenden sinusförmigen Kurvenzügen repräsentieren und bei dem die Induktivitätseigenschaften der Leitdrahteinrichtungen derart sind, daß jede an die Leitdrahteinrichtung ausgegebene und längs derer weitergeleitete Schwingung mit gestörtem sinusförmigem Kurvenzug durch die Induktivitätseigenschaften in eine Schwingung mit exakt sinusförmigem Kurvenverlauf umgewandelt wird, wobei der Übergang zwischen zwei derartigen Schwingungen mit exakt sinusförmigem Verlauf im wesentlichen sofort erfolgt und jegliche Signalstörung an dem Übergang im wesentlichen vermieden ist.

23. System nach Anspruch 14, das ferner enthält:
ein Kommunikationssubsystem, das einen nicht zum Fahrzeug gehörigen Teil, die die Sendesteuereinrichtung sowie die Empfängersteuereinrichtung umfaßt, und einen Fahrzeugteil mit der Fahrzeugsendeeinrichtung sowie der Fahrzeugempfängereinrichtung aufweist, wobei jeder Teil im wesentlichen die gleichen elektrischen Mittel aufweist und alle elektrischen Mittel im wesentlichen dieselben Kommunikationsdatensignale mit niedriger Frequenz und geringer Leistung senden und empfangen;
jedes Fahrzeug aus der Menge der führerlosen und Aufträge abwickelnden Fahrzeuge aufweist: Signalerkennungs- und Nachführmittel; wenigstens zwei Signalquellen;
Mittel zum Ausgeben der Signale von jeder Quelle auf und längs der Leitdrahtschleife;
bei dem die Leitdrahtschleife Eigenschaften aufweist, derart, daß die ausgegebenen Signale von den Fahrzeugsignalerkennungs- und Nachführmitteln erkannt und dazu verwendet werden, das Fahrzeug zu veranlassen, im wesentlichen dem durch die Leitdrahtschleife definierten Weg zu folgen;
Mittel zum Vermindern der Impedanz der Leitdrahtschleife, um sonst auftretende Amplitudenstörungen der Signale auf der Leitdrahtschleife zu vermindern.

24. System nach Anspruch 23, bei dem die Mittel zur Verminderung der Impedanz entgegengesetzte induktive Mittel, die jeweils mit der Leitdrahtschleife elektrisch in Verbindung stehen, sowie kapazitive Mittel umfassen, die zwischen den entgegengesetzten induktiven Mitteln eingefügt sind.

25. System nach Anspruch 23, bei dem ferner ein Empfänger und Widerstandseinrichtungen vorgesehen sind, die mit dem Empfänger und der Leitdrahtschleife elektrisch in Verbindung stehen, um die Impedanz der Leitdrahtschleife zu erhöhen und den fließenden Strom zu vermindern, damit ein verbesserter Empfang durch den Empfänger zustandekommt, wobei die Widerstandsmittel eine genaue Erkennung des Signals mit niedriger Leistung ermöglicht.

26. Kommunikationssystem nach Anspruch 22, bei dem die Empfängermittel Mittel aufweisen, um eine volle, von den Leitdrahtmitteln empfangene Kosinusschwingung in eine oder mehrere volle Sinusschwingungen umzuwandeln.

27. System nach Anspruch 22, bei dem die in dem Speicher gespeicherten Informationssätze jeweils eine Abweichung einer bestimmten sinusförmigen Schwingung repräsentieren und bei dem die Induktivitätseigenschaften der Leitdrahteinrichtung derart sind, daß jede gestörte sinusförmige Schwingung, die an die Leitdrahteinrichtung ausgegeben und längs dieser weitergeleitet wird, durch die Induktivitätseigenschaften in eine exakt sinusförmige Schwingung umgewandelt wird und der Übergang zwischen jeweils zwei derart exakt sinusförmigen Schwingungen im wesentlichen sofort erfolgt und jede Signalstörung am Übergang im wesentlichen vermieden ist.

28. System nach Anspruch 1, bei dem wenigstens eine Empfängereinrichtung zwei Empfänger umfaßt, von denen einer bei der Steuerwarte und der andere auf dem Fahrzeug vorgesehen ist; und
bei dem wenigstens eine Fahrzeugsendeeinrichtung oder Sendesteuereinrichtung zwei Sender umfaßt, von denen einer bei der Steuerwarte und der andere auf dem Fahrzeug zur bidirektionalen Übertragung vorgesehen ist; und bei dem das System ferner Mittel enthält, die zwischen dem Empfänger und dem Sender bei der Steuerwarte und dem Fahrzeug angeordnet sind, um den zugehörigen Empfänger zu sperren, wenn der entsprechende Sender sendet.

## Revendications

1. Dispositif qui fournit une communication bidirectionnelle destinée à commander plusieurs véhicules non surveillés devant exercer une tâche, ledit dispositif comportant :
un centre de commande par ordinateur constitué de moyens (70) de commande de trafic de véhicule,
plusieurs véhicules (58) non surveillés ayant une tâche à réaliser, éloignés du centre de commande par ordinateur, chaque véhicule constituant des premiers moyens émetteurs et des premiers moyens récepteurs,
des moyens (48 à 56, 80) formant fil de guidage définissant plusieurs trajets qui sont traversés de manière sélective par les véhicules, les moyens formant fil de guidage étant constitués de moyens destinés à émettre des données de commande vers chaque véhicule et une information d'état vers le centre de commande par ordinateur,
ledit dispositif étant caractérisé en ce qu'il comporte :
plusieurs circuits de communication connectés auxdits moyens formant fil de guidage et constitués chacun de seconds moyens (76) formant émetteur, de moyens (75) formant commande de récepteur et de seconds moyens formant récepteur (74),
lesdits seconds moyens formant émetteur (76) comportant des moyens (508) qui reçoivent des données numériques provenant desdits moyens (70) formant commande de trafic de véhicule, une mémoire (84) mémorisant des ensembles respectifs d'information numérique correspondant à différentes valeurs de chiffres binaires numériques, chaque ensemble d'information numérique représentant une forme d'onde analogue de fréquence respective choisie, des moyens (82) qui adressent la mémoire en réponse aux données numériques reçues provenant desdits moyens (71) formant commande de trafic de véhicule, des moyens sensibles auxdits moyens (82) qui adressent la mémoire, émettant en sortie une séquence desdits ensembles d'information numérique correspondant à la séquence des chiffres binaires dans les données numériques reçues à partir desdits moyens de commande de trafic du véhicule, des moyens (86) de conversion de ladite séquence des ensembles d'information numérique en une séquence correspondante de formes d'onde analogue de fréquences différentes et des moyens (90) émettant en sortie la séquence de formes d'onde analogue vers les moyens (48 à 56, 80) formant fil de guidage et le long des moyens formant fil de guidage destinée à être prélevée par les moyens formant récepteur du véhicule,
les moyens (75) de commande de récepteur de chaque circuit de communication déconnectant lesdits seconds moyens récepteurs (74) de ce circuit de communication, et par conséquent empêchant l'émission de tout message vers le centre de commande par ordinateur en provenance de tout véhicule sur les moyens formant fil de guidage reliés à ce circuit de communication, lorsque les moyens de commande de trafic de véhicule sont en train d'émettre un message relatif à une tâche vers un véhicule spécifié.

2. Dispositif selon la revendication 1, dans lequel les moyens émetteurs du centre de commande par ordinateur émettent chaque message prévu pour un seul véhicule globalement à tous les véhicules et dans lequel chaque véhicule comporte des moyens entraînant l'action d'inhibition desdits moyens (75) de commande de récepteur situés dans tous les autres véhicules pour ignorer ledit message global, à l'exception dudit seul véhicule.

3. Dispositif selon la revendication 2, dans lequel chaque véhicule comporte des seconds moyens formant récepteur (74) qui lorsqu'ils sont déconnectés par les moyens (75) de commande de récepteur inhibent les moyens émetteurs du véhicule associé sauf lorsque l'émission du véhicule est une réponse à une interrogation dudit véhicule spécifique par le centre de commande par ordinateur.

4. Dispositif selon la revendication 3, dans lequel le centre de commande par ordinateur comporte des moyens qui entraînent les véhicules à être interrogés en séquence de telle sorte que les véhicules ainsi interrogés sont amenés à répondre en séquence.

5. Dispositif selon la revendication 1, dans lequel le centre de commande par ordinateur comporte des moyens d'estimation du temps destinés à estimer la longueur de temps nécessitée par le véhicule spécifique pour réaliser chaque tâche assignée et comporte en outre des moyens qui interrogent l'état du véhicule spécifique à la fin de ladite longueur de temps estimée.

6. Dispositif selon la revendication 1 comportant en outre des moyens qui définissent électroniquement des segments de longueur des moyens formant fil de guidage et qui identifient électroniquement et réservent exclusivement au véhicule spécifique tous les segments de longueur de fil de guidage nécessaires pour réaliser une tâche assignée jusqu'à ce que la tâche assignée soit réalisée.

7. Dispositif selon la revendication 1, dans lequel ledit centre de commande par ordinateur comporte en outre des moyens qui normalement empêchent la transmission d'un double des messages du centre de commande par ordinateur et des moyens qui provoquent un double du message du centre de commande par ordinateur destiné à être transmis uniquement lorsque le message original n'a pas été reconnu par le véhicule pour lequel il était prévu.

8. Dispositif selon la revendication 1 dans lequel :
chaque récepteur de commande est accouplé avec des moyens de commande de récepteur qui communiquent électroniquement avec lui :
chaque moyen de commande de récepteur est en communication électrique avec tous les autres moyens de commande de récepteur,
les moyens formant fil de guidage reçoivent chaque message de sortie provenant de chaque émetteur de véhicule de chaque véhicule traversant les moyens formant fil de guidage et communiquent ledit message à l'un des récepteurs de commande et reçoivent chaque message de sortie de commande provenant des moyens émetteurs de commande et communiquent ledit message de sortie reçu provenant des moyens émetteurs de commande jusqu'à un véhicule prédéterminé,
les moyens de commande de trafic de véhicule sont en communication électrique avec chaque récepteur de commande de telle sorte qu'un message reçu par un récepteur de commande quelconque est communiqué aux moyens de commande de trafic de véhicule,
chaque moyen de commande récepteur comporte des moyens émettant un signal déconnectant de manière sélective le récepteur associé lors de la réception d'un signal provenant d'autres moyens de commande de récepteur, par lesquels le dispositif est bloqué au préalable de manière temporaire pour la transmission d'un seul message entre les moyens de commande de trafic de véhicule et un véhicule,
de manière à éviter un mélange de messages avec des erreurs résultantes de telle sorte que le système accepte une expansion infinie en ce qui concerne le nombre de véhicules et de fils de guidage.

9. Dispositif selon la revendication 1, dans lequel :
les moyens de commande de trafic comportent en outre des moyens qui identifient électroniquement les moyens formant segments de longueur de fil de guidage qui identifient électroniquement chaque tâche de transport à réaliser par tout véhicule, des moyens qui font correspondre la tâche de transport et les segments de longueur de fil de guidage nécessités pour exécuter chaque tâche de transport, des moyens de réservation des segments de longueur de fil de guidage requis pour la réalisation d'une tâche de transport spécifique assignée à l'un desdits véhicules, des moyens entraînant les moyens émetteurs de commande de trafic à communiquer la tâche spécifique au récepteur de véhicule dudit un véhicule et à allouer les segments de longueur de fil de guidage réservés audit un véhicule, après quoi les moyens de commande de trafic entraînent ledit un véhicule à exécuter la tâche spécifique en utilisant les segments de longueur de fil de guidage réservés, des moyens pour empêcher la tâche spécifique et les segments de longueur de fil de guidage réservés d'être exécutée et d'être rendus disponibles, respectivement, pour un second véhicule pendant la réalisation de la tâche spécifique et l'utilisation des segments de longueur de fil de guidage réservés par ledit un véhicule, de telle sorte que, par allocation temporaire exclusive des segments de longueur de fil de guidage, les trajets de déplacement et les tâches réalisées par les véhicules sont strictement commandés et qu'un conflit entre véhicules est évité.

10. Dispositif selon la revendication 9, dans lequel les moyens de commande de trafic comportent en outre des moyens récepteurs de commande et dans lequel chaque véhicule comporte en outre des moyens émetteurs de véhicule en communication avec les moyens récepteurs de commande et dans lequel les moyens émetteurs de véhicule comportent des moyens qui (a) envoient de manière sélective un signal aux moyens de commande de trafic par l'intermédiaire des moyens récepteurs de commande lorsqu'une tâche spécifique assignée au véhicule avec lequel les moyens émetteurs sont associés a été réalisée et (b) libèrent les moyens de commande de trafic d'au moins à peu près tous les segments de longueur de fil de guidage réservés pour une ré-allocation par les moyens de commande de trafic.

11. Dispositif selon la revendication 10, dans lequel le signal et les moyens de libération libèrent tous les segments de longueur de fil de guidage réservés à l'exception du segment de longueur des moyens formant fil de guidage physiquement occupé par le véhicule au moment de la libération.

12. Dispositif selon la revendication 1 dans lequel :
les moyens de commande de trafic de véhicule comportent en outre,
des moyens par lesquels une tâche donnée et des habilitations de trajet pour réaliser ladite tâche sont exclusivement délégués à un seul véhicule du dispositif, lesdites habilitations de trajet comportant la réservation de segments de longueur spécifique du trajet défini par lesdits moyens formant fil de guidage au seul véhicule,
des moyens par lesquels un temps prédéterminé pour exécuter ladite tâche est établi et des moyens entraînant le seul véhicule à être interrogé par les moyens de commande de trafic à un moment correspondant à peu près au temps prédéterminé établi.

13. Dispositif selon la revendication 12, dans lequel les moyens d'établissement de temps sont en communication électrique, par l'intermédiaire des moyens formant fil de guidage, avec les moyens de commande de trafic de véhicule, mais sont portés par le véhicule.

14. Dispositif selon la revendication 1, dans lequel :
les moyens émetteurs de commande et les moyens émetteurs de véhicule et les moyens récepteurs de commande et les moyens récepteurs de véhicule, respectivement comportent :
à peu près les mêmes moyens électriques, chacun des moyens électriques émettant et recevant à peu près les mêmes signaux de données de communication, comprenant des moyens de création de signal et des moyens formant antenne destinés à émettre le signal créé provenant du véhicule vers le fil de guidage, et vice versa,
les moyens formant antenne dans la partie véhicule comportant au moins deux boucles conductrices opposées, chaque boucle conductrice comportant plusieurs tours.

15. dispositif selon la revendication 14 dans lequel les boucles des moyens formant antenne comportent de manière collective une configuration ayant un dessin en forme de huit à peu près symétrique qui est à peu près située symétriquement le long de l'axe central du véhicule et enroulée pour diriger tout l'écoulement de courant de manière unidirectionnelle le long d'une barre centrale de la configuration ayant la forme d'un huit.

16. Dispositif selon l'une quelconque des revendications 1 à 15, dans lequel les fréquences respectives sont de l'ordre de 9 600 Hz et 19 200 Hz avec des débits de transmission de données allant jusqu'à 9 600 BAUD.

17. Dispositif selon la revendication 14 ou 15, dans lequel chaque boucle conductrice comporte un circuit imprimé déposé sur une carte de circuit imprimé.

18. Dispositif selon la revendication 14 ou 15, dans lequel les moyens formant antenne comportent au moins deux ensembles de deux telles boucles conductrices opposées, un ensemble de boucles conductrices opposées étant porté par le véhicule en un emplacement tel qu'il soit à peu près disposé symétriquement par rapport à l'axe central du véhicule, et le second ensemble de boucles conductrices étant porté par le véhicule en un autre emplacement de manière à être également à peu près disposé symétriquement par rapport à l'axe central du véhicule.

19. Dispositif selon l'une quelconque des revendications précédentes, dans lequel chaque forme d'onde analogique comporte un ou plusieurs cycles complets de forme d'onde cosinus de telle sorte que la nature distincte de chaque cycle de forme d'onde est préservée.

20. Dispositif selon la revendication 19, dans lequel les moyens récepteurs du véhicule comportent des moyens pour transformer les cycles de forme d'onde cosinus reçus provenant des moyens formant fil de guidage en un ou plusieurs cycles complets de forme d'onde sinus de telle sorte que des erreurs de décodage soient moins probables.

21. Dispositif selon la revendication 20 comportant en outre :
des moyens pour produire des formes d'onde ayant au moins deux fréquences différentes et pouvant être distinguées qui produisent des données numériques représentant au moins deux états logiques de telle sorte que le débit d'émission puisse être le même que celui de la fréquence la plus basse utilisée.

22. Dispositif selon la revendication 20, dans lequel les ensembles d'information mémorisée dans la mémoire représentent chacun une déformation des formes d'onde sinusoïdales respectives et dans lequel des caractéristiques d'inductance des moyens formant fil de guidage sont tels que chaque cycle de forme d'onde sinusoïdale déformée sorti vers les moyens formant fil de guidage et communiqué le long de ceux-ci est modifié par lesdites caractéristiques d'inductance sous forme d'un cycle de forme d'onde sinusoïdale exacte et la transition entre un quelconque des deux cycles de forme d'onde sinusoïdale exacte est à peu près instantanée et un signal quelconque de déformation est à peu près évité au niveau de ladite transition.

23. Dispositif selon la revendication 14 comportant en outre :
un sous-ensemble de communication qui comporte une partie non véhiculée comportant les moyens émetteurs de commande et les moyens récepteurs de commande et une partie véhiculée comportant les moyens émetteurs de véhicule et les moyens récepteurs de véhicule, chaque partie comportant à peu près les mêmes moyens électriques, chacun des moyens électriques émettant et recevant à peu pres les mêmes signaux de données de communication ayant une fréquence faible et une puissance faible,
chaque véhicule desdits plusieurs véhicules non surveillés ayant une tâche à réaliser comportant des moyens de détection de signal et d'enregistrement de signal, au moins deux sources de signaux, des moyens pour émettre en sortie les signaux provenant de chaque source vers la boucle de fil de guidage et le long de cette dernière,
la boucle de fil de guidage ayant des caractéristiques telles que lesdits signaux émis en sortie sont détectés par les moyens de détection et d'enregistrement de signal du véhicule utilisés pour entraîner le véhicule à suivre à peu près le trajet défini par la boucle de fil de guidage,
des moyens pour réduire l'impédance de la boucle de fil de guidage de telle sorte qu'une détérioration d'amplitude des signaux de la boucle de fil de guidage, qui autrement apparaitrait, soit évitée.

24. Dispositif selon la revendication 23, dans lequel les moyens de réduction d'impédance comportent des moyens inducteurs opposés respectivement en communication électrique avec la boucle de fil de guidage et avec des moyens formant condensateur interposé entre les moyens inducteurs opposés.

25. Dispositif selon la revendication 23 comportant en outre un récepteur, des moyens formant résistance en communication électrique avec le récepteur et avec la boucle de fil de guidage pour augmenter l'impédance dans la boucle de fil de guidage et diminuer l'écoulement de courant dans la boucle de fil de guidage pour permettre une réception améliorée du récepteur de telle sorte que les moyens formant résistance permettent une détection précise du signal à faible puissance.

26. Dispositif de communication selon la revendication 22, dans lequel les moyens formant récepteur comportent des moyens pour transformer les formes d'ondes cosinus entières reçues provenant des moyens formant fil de guidage en une ou plusieurs formes d'onde sinus complètes.

27. Dispositif selon la revendication 22, dans lequel les ensembles d'information mémorisés dans la mémoire représentent chacun une déformation d'un cycle de forme d'onde sinusoïdale distincte et dans lequel les caractéristiques d'inductance des moyens formant fil de guidage sont tels que chaque cycle de forme d'onde sinusoïdale déformée émis en sortie vers les moyens formant fil de guidage et communiquée le long de ces derniers est modifiée par lesdites caractéristiques d'inductance en un cycle de forme d'onde sinusoïdale exacte et la transition entre un quelconque des deux cycles de forme d'onde sinusoïdale exacte est à peu près instantanée et tout signal de déformation au niveau de ladite transition est à peu près évité.

28. Dispositif selon la revendication 1, dans lequel au moins un moyen formant récepteur comporte deux récepteurs, un sur le site de commande, et l'autre sur le véhicule,
dans lequel ledit au moins un moyen formant émetteur de véhicule ou moyen formant émetteur de commande comporte deux émetteurs, un au niveau du site de commande, et l'autre sur le véhicule pour une transmission bi-directionnelle, et ledit dispositif comporte en outre des moyens interposés entre le récepteur et l'émetteur au niveau du site de commande et au niveau du véhicule pour déconnecter le récepteur associé lorsque l'émetteur associé est en train de transmettre.
